# EUROPÄISCHE PATENTSCHRIFT

(11) **EP 4 075 019 B1**
(45) Veröffentlichungstag und Bekanntmachung des Hinweises auf die Patenterteilung: **03.12.2025**
(21) Anmeldenummer: 21168673.8
(22) Anmeldetag: 15.04.2021
(51) Int. Cl.: F16G 13/12, F16G 15/12

(54) **STAHLKETTE UND VERFAHREN ZU IHRER HERSTELLUNG**
STEEL CHAIN AND METHOD FOR THE PRODUCTION OF SAME
CHAÎNE EN ACIER ET SON PROCÉDÉ DE FABRICATION

(43) Veröffentlichungstag der Anmeldung: 19.10.2022
(73) Patentinhaber: Pewag Austria GmbH, 8605 Kapfenberg (AT)
(72) Erfinder: Pengg, Ägyd, 9020 Klagenfurt (AT); Fuchs, Franz, 8605 Kapfenberg (AT)
(74) Vertreter: Patentanwaltskanzlei Matschnig & Forsthuber OG

(56) Entgegenhaltungen:
- DE-B3- 102016 121 021
- DE-C- 652 735
- US-A1- 2013 219 851

## Beschreibung

Die Erfindung betrifft eine Stahlkette, welche gelenkig miteinander verbundene Kettenglieder umfasst, wobei bei jedem Kettenglied jeweils zwei einander gegenüberliegende Kettengliedbögen über zwei im Wesentlichen gerade Kettengliedschenkel miteinander zu einer Ringform verbunden sind, wobei eine der jeweils zwei Kettengliedschenkel eine Schweißstelle aufweist, und wobei jeder Kettengliedschenkel der Stahlkette zumindest außerhalb des Bereiches der Schweißstelle einen konstanten Nennquerschnitt mit gleichbleibender Nennquerschnittsgeometrie und gleichbleibender Nennquerschnittsfläche aufweist, und wobei die Nennquerschnittsgeometrie zumindest an einer Innenseite des Kettengliedschenkels einen gerundeten Umfangsabschnitt mit einem Nennrundungsradius aufweist.

Weiters betrifft die Erfindung ein Verfahren zur Herstellung einer solchen Stahlkette.

Der Begriff einer Stahlkette umfasst sowohl eine sogenannte Rundstahlkette, also eine Stahlkette mit Kettengliedern, die aus einem Rundstahlmaterial gefertigt sind, als auch gleichermaßen eine sogenannte Profilstahlkette, bei der die Kettenglieder aus einem Walzstahlmaterial mit einer profilierten Querschnittsgeometrie hergestellt sind.

Generell ist eine Gliederkette die einfachste Kettenart, bei der die meist ovalen einzelnen Kettenglieder direkt ineinandergefügt sind und raumbeweglich ineinandergreifen. Gliederketten werden üblicherweise aus Walzdrähten oder gewalzten Rundstählen meist mit kreisrunder Querschnittsform durch entsprechendes Ablängen des Ausgangsmaterials, durch anschließendes Biegen und Verschweißen, insbesondere mittels Widerstands- oder Abbrennstumpfschweißen, industriell hergestellt. Man spricht daher auch von Rundstahlketten.

Dazu werden von den Walzdrähten oder Walzstäben definierte Längenabschnitte, sogenannte Pins, abgetrennt, welche in Biegemaschinen um Biegedorne zu vorgebogenen Kettengliedern und einer vorgebogenen Kette verarbeitet werden. In Widerstands- oder Abbrennstumpfschweißmaschinen werden die Enden der vorgebogenen Kettenglieder anschließend zur fertigen Kette verschweißt. Da für den Schweißvorgang kein Fremdmaterial verwendet wird, gewährleisten diese Schweißverfahren eine Festigkeit der Schweißstelle, die der des Grundwerkstoffes entspricht bzw. diese sogar übersteigen kann.

Bei jedem einzelnen Kettenglied sind jeweils zwei einander gegenüberliegende Kettengliedbögen über zwei im Wesentlichen gerade Kettengliedschenkel miteinander zu einer Ringform verbunden, wobei eine der jeweils zwei Kettengliedschenkel eine Schweißstelle aufweist. Vereinbarungsgemäß werden jene Konturabschnitte eines Kettenglieds, die sich innerhalb der Ausnehmung des Kettenglieds bzw. an den Innenseiten der Kettengliedbögen oder an den Innenseiten der Kettengliedschenkel befinden, als "innenseitig" bezeichnet. Die Innenseiten eines Kettenglieds werden überdies durch die Kettenteilung, also das Ist-Maß der Innenlänge des Kettenglieds, sowie durch die innere Kettengliedbreite festgelegt. Die Außenseiten eines Kettengliedes, welche den Innenseiten bzw. der Kettengliedausnehmung gegenüberliegen, umfassen die Außenseiten der Kettengliedbögen sowie die Außenseiten der Kettengliedschenkel. Jene Konturabschnitte eines Kettenglieds, die sich an den Außenseiten der Kettengliedbögen oder an den Außenseiten der Kettengliedschenkel befinden, werden im Weiteren als "außenseitig" bezeichnet.

Derartige Rundstahlketten können aufgrund ihrer hohen Raumbeweglichkeit besonders vielseitig eingesetzt werden - beispielsweise als Hebezeugkette zum Heben und Bewegen von Lasten, als Anschlagkette zur Sicherung von Ladungen, oder als Förderkette zur Förderung von Schüttgütern. Rundstahlketten werden auch aus nichtrostendem Edelstahl sowie aus Vergütungsstahl hergestellt.

Analog dazu können auch Profilstahlketten, bei der die Kettenglieder aus einem Walzstahlmaterial mit einer profilierten Querschnittsgeometrie hergestellt sind, für dieselben Anwendungen, beispielsweise als Hebezeugketten, Anschlagketten oder Förderketten, eingesetzt werden. Ein Querschnitt durch ein Kettenglied einer solchen Profilstahlkette weist zumindest an einer Innenseite eines Kettengliedschenkels einen gerundeten Umfangsabschnitt mit einem Nennrundungsradius auf. Im Bereich dieses gerundeten Umfangsabschnitts greifen zwei benachbarte Kettenglieder einer solchen Profilstahlkette im Bereich ihrer Kettengliedinnenrundungen ineinander. Je nach Ausführung können bei einer solchen Profilstahlkette Profilstähle beispielsweise mit einem sogenannten D-Profil eingesetzt werden, bei dem die Querschnittsgeometrie bzw. Kontur des Nennquerschnitts neben einem gerundeten Umfangsabschnitt weiters noch Umfangsabschnitte mit Querschnittsabflachungen und/oder geraden Konturabschnitten, sogenannten Flanken, umfasst. Solche Querschnittsabflachungen bzw. Flanken sind zweckmäßiger Weise an den Kettengliedaußenseiten angeordnet, während der gerundete Umfangsabschnitt an den Kettengliedinnenseiten, insbesondere im Bereich der Innenseiten der Kettengliedbögen, angeordnet ist.

Vorteilhaft kann bei solchen Profilstahlketten im Vergleich zu Rundstahlketten sein, dass Profilstahlketten bei geeigneter Auswahl der Profilgeometrie in seitlicher Querrichtung eines Kettenglieds vergleichsweise schmal bzw. "schlank" bauen. Je nach ausgewählter Querschnittsgeometrie kann der nominale Nenndurchmesser bzw. eine dem Nenndurchmesser entsprechende Nennquerschnittsbreite einer solchen Profilstahlkette somit im Vergleich zu einer Rundstahlkette verringert werden - bei sonst gleichbleibendem Flächeninhalt der Querschnittsflächen und gleicher Festigkeit der zu vergleichenden Stahlkettenglieder. Der Einsatz einer solchen Profilstahlkette mit profilierter Querschnittsgeometrie kann also vorteilhaft den Einsatz eines kleineren Kettentriebs und schlussendlich eines kleineren Hebezeugs ermöglichen, was besonders wirtschaftlich sein kann.

Mit der herkömmlichen Herstellungsmethode kann Walzstahlmaterial, können insbesondere Walzdrähte oder Walzstäbe, mit jeweils gleichbleibendem, konstantem Nennquerschnitt zu Kettengliedern und weiter zu Stahlketten verarbeitet werden. Die so hergestellten, herkömmlichen Stahlketten weisen jedoch im Wesentlichen an jeder Stelle des Kettengliedes - allenfalls mit Ausnahme der Schweißstelle - den gleichen Nennquerschnitt mit gleichbleibender Nennquerschnittsfläche und mit gleichbleibender Geometrie des Nennquerschnitts auf.

Im Bereich der Kettengliedinnenrundungen, wo zwei benachbarte Kettenglieder im Bereich ihrer jeweiligen Kettengliedbögen jeweils ineinandergreifen, sind solche Stahlketten jedoch naturgemäß besonders hohem Verschleiß ausgesetzt. Dies gilt gleichermaßen für Stahlketten, deren Kettenglieder aus Rundstahl- oder aus Profilstahlmaterial gefertigt sind.

Die Schweißstelle kann bei solchen Stahlketten definitionsgemäß einen im Vergleich zum Nenndurchmesser des Ausgangsmaterials vergrößerten Schweißstellendurchmesser bzw. eine vergrößerte Schweißstellendicke aufweisen - entsprechend dem jeweiligen Ist-Maß an der Schweißstelle. Ja nach Ausführung und Qualitätsanforderungen an eine Stahlkette kann dieses Ist-Maß des Durchmessers bzw. der Kettenglieddicke an der Schweißstelle im festgelegten Rahmen die Nennquerschnittsfläche überschreiten oder aber der Nennquerschnittsfläche entsprechen.

Im Fall von geschweißten Rundstahlketten für Hebezwecke ist beispielsweise in der Norm EN 818-1 festgelegt, dass der Schweißstellendurchmesser das in den einzelnen Teilen von EN 818 für die jeweilige Kettenart und Güteklasse festgelegte Maß nicht überschreiten darf. So gilt für mitteltolerierte Rundstahlketten der Güteklasse 8 gemäß EN 818-2 beispielsweise, dass der maximale Schweißstellendurchmesser d_{S,MAX} höchstens 10% größer als der nominale Durchmesser d_{N} des Rundstahlkettenglieds sein darf: d_{S,MAX} = 1,1 d_{N}

Für feintolerierte Rundstahlketten der Güteklasse T gilt gemäß EN 818-7 beispielsweise, dass der maximale Schweißstellendurchmesser d_{S,MAX} die Nenndicke d_{N} in keiner Richtung um mehr als 8% überschreiten darf: d_{S,MAX} = 1,08 d_{N}

Aus dem Stand der Technik sind bereits unterschiedliche Ansätze zur Reduktion von Kettenverschleiß bekannt geworden. So betrifft beispielsweise das Dokument DE 35 12 091 C2 eine Förderkette mit elastischen Abdeckungen im Bereich der Gelenkzonen, die beispielhaft aus Polyurethanschaum hergestellt sein können. Damit soll der Kettenverschleiß reduziert werden, da die elastischen Abdeckungen das Eindringen von abrasiven Medien in die Gelenkzonen verhindern. Nachteilig an dieser Ausführung ist jedoch, dass das Anbringen der elastischen Abdeckungen an jedem einzelnen Kettenglied aufwendig ist und dass unter besonders rauen Einsatzbedingungen, beispielsweise als Förderkette im Bergbau, auch die elastischen Abdeckungen selbst einem hohen mechanischen Verschleiß ausgesetzt sind und daher regelmäßig auszutauschen sind.

Aus dem Dokument EP 2 885 558 B1 ist eine Förderkette mit zusätzlichen Verschleißschutzkörpern bekannt. Nachteilig an dieser Ausführung ist jedoch, dass die Verschleißschutzkörper nur zum Schutz der Kettengliedschenkel, also der geraden Abschnitte eines Kettengliedes, dienen, wobei die besonders beanspruchten Kettengliedbögen insbesondere im Bereich der Kettengliedinnenrundungen hingegen weiterhin ungeschützt einem Verschleiß ausgesetzt sind.

Aus dem Dokument DE 201 03 234 U1 sind Lastaufnahmeeinrichtungen unter anderem mit einer Kette bekannt geworden, wobei sämtliche Glieder der Kette mit Markierungen in Form von Rillen, Rippen, Noppen, Mulden oder dergleichen versehen sind, die als Verschleißmarkierungen dienen. Anhand des Abriebs dieser Verschleißmarkierungen gelingt es zwar, den Verschleißfortschritt an entsprechend ausgerüsteten Ketten zu erkennen und diese rechtzeitig aus dem Verkehr ziehen zu können, sobald die Kettenglieder entsprechende Verschleißspuren zeigen. Einen erhöhten Verschleißschutz, durch den die Lebensdauer der Ketten verlängert wird, bieten solche Verschleißmarkierungen jedoch nicht.

Aus dem Dokument DE 10 2011 050 425 B4 ist eine Rundstahlkette bekannt, bei der die einzelnen Kettenglieder im Bereich der Kettenbögen jeweils an ihren längsseitigen Außenflächen angeordnete Verdickungen aufweisen. Diese seitlich über den Querschnitt der Kettenbögen überragenden, abstehenden Verdickungen sorgen zwar für eine Querschnittsverdickung im Bereich der Kettenbögen sowie für eine vergrößerte Kontaktfläche, um den Verschleiß zwischen den Kettenbögen ineinandergreifender Kettenglieder zu reduzieren. Diese spezielle Ausführung einer Rundstahlkette weist jedoch zumindest die folgenden Nachteile auf: So sind die seitlich nach außen abstehenden Verdickungen in der Herstellung sehr aufwendig. Derartige speziell geformte Kettenglieder mit seitlich abstehenden Verdickungen können nicht durch einen einfachen Biegevorgang hergestellt werden, sondern machen den Einsatz eines aufwendigen und teuren Schmiede-, Gieß-, oder Sinterprozesses oder eines additiven Fertigungsprozesses zwingend erforderlich. Überdies führen die Verdickungen im Bereich der Kettenbögen bei Lasteinleitung infolge Zugbeanspruchung der Kette zu lokalen Spannungsspitzen und damit zu einem ungleichmäßigen Spannungsverlauf im jeweiligen Kettenglied, der die Tragfähigkeit der Kette insgesamt ungünstig beeinflusst. Weiters ist von Nachteil, dass die seitlich über den Querschnitt der Kettenbögen überragenden, abstehenden Verdickungen für sich einem erhöhten Verschleiß ausgesetzt sind, und insofern auch dieselben Nachteile wie die aus dem Dokument DE 201 03 234 U1 bekannt gewordenen Verschleißmarkierungen beispielsweise in Form von überstehenden Rippen aufweisen. DE652735C offenbart eine ähnliche Stahlkette.

Die vorliegende Erfindung stellt sich daher die Aufgabe, für Stahlketten der eingangs genannten Art die aus dem Stand der Technik bekannten Nachteile zu vermeiden, und dazu eine verschleißfeste Stahlkette mit verbesserten Verschleißeigenschaften im Bereich der hochbeanspruchten Kettengliedinnenrundungen anzugeben, die in ihrer Herstellung einfach und kostengünstig ist, die im Wesentlichen keine seitlich in Querrichtung von den Kettengliedern abstehenden Verdickungen aufweisen soll und bei der der Spannungsverlauf im einzelnen Kettenglied bei Lasteinleitung infolge Zugkraft möglichst vergleichmäßigt ist. Eine weitere Aufgabe der Erfindung besteht darin, ausgehend vom eingangs genannten, etablierten Herstellungsprozess mittels Biegeverfahren - bei dem von den Walzdrähten oder Walzstäben definierte Längenabschnitte bzw. Pins abgetrennt, diese danach in Biegemaschinen um Biegedorne zu vorgebogenen Kettengliedern und einer vorgebogenen Kette verarbeitet werden, und anschließend die Enden der vorgebogenen Kettenglieder jeweils miteinander verschweißt werden - ein neuartiges, verbessertes Verfahren für die Herstellung einer solchen verschleißfesten Stahlkette anzugeben, das mit möglichst geringen Adaptionen des derzeit etablierten Biegeverfahrens durchgeführt werden kann und das weiterhin eine einfache und wirtschaftliche Herstellung von Stahlketten mit verbesserten Verschleißeigenschaften ermöglicht.

Diese erfindungsgemäßen Aufgaben werden bei einer Stahlkette gemäß dem Oberbegriff des Anspruchs 1 mit den kennzeichnenden Merkmalen von Anspruch 1 gelöst.

Hinsichtlich des neuartigen Herstellungsverfahrens werden diese erfindungsgemäßen Aufgaben mit einem Verfahren gemäß den Merkmalen von Anspruch 13 gelöst. Die Unteransprüche betreffen jeweils besonders vorteilhafte Ausgestaltungen der Erfindung.

Bei einer erfindungsgemäßen Stahlkette aus gelenkig miteinander verbundenen Kettengliedern der eingangs genannten Art weist jeder Kettengliedbogen ausgehend von dem Nennquerschnitt der Kettengliedschenkel jeweils entlang eines modifizierten Längenabschnitts einen im Vergleich zum Nennquerschnitt der Kettengliedschenkel modifizierten Querschnitt mit einer modifizierten Querschnittsgeometrie und einer modifizierten Querschnittsfläche auf, wobei die Querschnittmodifikation darin besteht, dass die modifizierte Querschnittsfläche und die Nennquerschnittsfläche zwar flächengleich sind, die modifizierte Querschnittsgeometrie jedoch von der Nennquerschnittsgeometrie abweicht, indem der modifizierte Querschnitt eine durch Umformen des Nennquerschnitts hergestellte Querschnittsabflachung an einer Außenseite des Kettengliedbogens und gleichzeitig eine an einer der Außenseite gegenüberliegenden Innenseite des Kettengliedbogens angeordnete, mit umgeformtem Material verstärkte modifizierte Verschleißzone aufweist, wobei die modifizierte Verschleißzone in Form eines gerundeten modifizierten Umfangsabschnitts mit einem im Vergleich zum Nennrundungsradius vergrößerten modifizierten Rundungsradius ausgebildet ist.

Unter dem hier verwendeten Begriff "modifiziert" beispielsweise im Zusammenhang mit dem Querschnitt, der Querschnittsgeometrie, der Querschnittsfläche, dem Rundungsradius entlang eines gerundeten Umfangsabschnitts oder einer zusätzlichen Verschleißzone wird im Weiteren verstanden, dass die solcherart näher bezeichneten Angaben eines "modifizierten" Kettenglieds durch erfindungsgemäßes Umformen von Material von der Außenseite eines Kettengliedbogens hin zu seiner Innenseite geändert sind im Vergleich zu den jeweils korrespondierenden Angaben zum ursprünglichen Ausgangsmaterial bzw. zu einem herkömmlichen Kettenglied ohne solche Modifikationen.

Definitionsgemäß ist hier und im Weiteren mit dem Begriff "Querschnittsfläche" der Flächeninhalt des Querschnitts gemeint. Gemäß der mathematischen Definition des Begriffs "flächengleich" sind darunter Flächen von zwei oder mehreren unterschiedlichen geometrischen Figuren zu verstehen, die hinsichtlich der Größe ihrer Flächeninhalte übereinstimmen. Unter dem Begriff "Querschnittsgeometrie" ist hier die Querschnittskontur eines Querschnitts zu verstehen. Im Falle des Einsatzes von Rundstahlmaterial zur Herstellung einer Rundstahlkette entspricht die Querschnittsgeometrie bzw. Querschnittskontur des ursprünglichen Ausgangsmaterials ohne Modifikation im Wesentlichen einer Kreisform. Im Falle des Einsatzes von Profilstahlmaterial entspricht die die Querschnittsgeometrie bzw. Querschnittskontur des ursprünglichen Ausgangsmaterials ohne Modifikation der jeweils gewählten Profilgeometrie.

Unter dem Begriff "Umformen" wird hier verstanden, dass außenseitig im Bereich entlang eines modifizierten Längenabschnitts an einem Kettengliedbogen infolge einer Querschnittsabflachung abgetragenes Material beispielsweise durch Einsatz geeigneter Präge-, Press-, Roll- und/oder Biege-Vorrichtungen durch Kaltfließ-, Halbwarm- oder Warmpressen oder durch Warmrollen solcherart umgeformt wird, sodass dieses außenseitig fehlende, abgeflachte Material in Umfangsrichtung bzw. Tangentialrichtung entlang des jeweiligen Kettengliedbogens verdrückt und im Bereich der Kettengliedinnenrundung an der Innenseite desselben Kettengliedbogens innerhalb desselben modifizierten Längenabschnitts angeordnet wird. Dieses zusätzliche, umgeformte Material, das durch Umformen an der Innenseite desselben Kettengliedbogens angeordnet ist, bildet vorteilhaft eine verstärkte modifizierte Verschleißzone an den am stärksten durch Verschleiß belasteten Bereichen der Kettengliedinnenrundungen. Die modifizierte Verschleißzone ist dazu in Form eines gerundeten modifizierten Umfangsabschnittes mit einem im Vergleich zum Nennrundungsradius vergrößerten modifizierten Rundungsradius ausgebildet oder umfasst einen solchen gerundeten modifizierten Umfangsabschnitt mit einem vergrößerten modifizierten Rundungsradius.

Von Vorteil ist dabei, dass die durch Umformen hergestellte modifizierte Verschleißzone den gerundeten Umfangsabschnitt innerhalb der Innenseite des Kettengliedbogens "aufpolstert", indem dort der modifizierte Rundungsradius entsprechend vergrößert wird, während das entsprechend modifizierte Kettenglied "schlank" bleibt und durch das Umformen im Wesentlichen keine Querschnittsverbreiterung in seitlicher Querrichtung des Kettenglieds erfolgt.

Aufgrund des vergrößerten modifizierten Rundungsradius an den Innenseiten der Kettengliedbögen wird die Querschnittsgeometrie eines Kettenglieds genau an denjenigen Stellen modifiziert, an denen die Hauptverschleißbeanspruchung der Kettenglieder stattfindet. Die modifizierten Kettenglieder einer erfindungsgemäßen Stahlkette weisen somit jeweils im Gelenkbereich zwischen benachbarten Kettengliedern, in dem der stärkste Verschleiß der Ketten auftritt, ein vergrößertes Verschleißvolumen als im übrigen Kettengliedbereich auf.

Weiters ist von Vorteil, dass der infolge der Umformung vergrößerte modifizierter Rundungsradius an der Innenseite des Kettengliedbogens ohne einen additiven Fertigungsprozess erhalten wird, was kostengünstig in der Herstellung ist und ein im Wesentlichen konstantes Kettengewicht im Vergleich zu einer herkömmlichen Stahlkette in Form einer Rundstahlkette oder einer Profilstahlkette mit jeweils denselben Kettengliedabmessungen, jedoch ohne Querschnittsmodifikationen, gewährleistet.

Die Querschnittsmodifikation im Bereich der Kettengliedbögen eines Kettengliedes kann sich gegebenenfalls auch in einem Übergangsbereich zwischen einem Kettengliedbogen und den daran anschließenden Kettengliedschenkeln entlang eines Abschnittes eines oder beider Kettengliedschenkel erstrecken. Die Herstellung der umgeformten, modifizierten Längenabschnitte kann dadurch vereinfacht werden, indem die Übergangsbereiche zwischen den modifizieren Längenabschnitten mit modifiziertem Querschnitt und den dazwischenliegenden Längenabschnitten mit ursprünglichem Nennquerschnitt im Bereich der Kettengliedschenkel angeordnet werden. Zweckmäßig bleiben jedoch zumindest 60%, vorzugsweise 80%, der Länge eines Kettengliedschenkels, der ohne Schweißstelle ist, frei von der Querschnittsmodifikation. Zumindest entlang dieses Abschnitts eines Kettengliedschenkels bleibt also auch bei einem erfindungsgemäßen Kettenglied der ursprüngliche Nennquerschnitt des Rundstahls oder Profilstahls ohne Querschnittsmodifikation erhalten.

Einhergehend mit dem vergrößerten modifizierten Rundungsradius im Bereich der Innenseiten der Kettengliedbögen ergibt sich für eine erfindungsgemäße Stahlkette eine geringere Flächenpressung der Gelenksverbindungen bei Zugbelastung der Stahlkette und somit weniger Verschleiß sowie eine längere Lebensdauer.

In einer besonders zweckmäßigen Ausführung der Erfindung kann bei einer Stahlkette bei einem Kettenglied entlang des modifizierten Längenabschnittes mit einer modifizierten Querschnittsgeometrie das Ausmaß einer lokalen Querschnittsflächenvergrößerung infolge der innenseitig angeordneten modifizierten Verschleißzone mit dem Ausmaß einer lokalen Querschnittsflächenverringerung infolge der außenseitigen Querschnittsabflachung korrelieren, insbesondere gleiche Flächenbeträge aufweisen.

In dieser Ausführung erfolgt vorteilhaft die Umformung von der ursprünglichen Nennquerschnittsgeometrie zur modifizierten Querschnittsgeometrie solcherart, dass die Querschnittsflächenvergrößerung infolge der innenseitig angeordneten modifizierten Verschleißzone im Bereich der Innenseite des Kettengliedbogens der Querschnittsflächenverringerung infolge der außenseitigen Querschnittsabflachung an der Außenseite desselben Kettengliedbogens entspricht. Die modifizierte Querschnittsfläche entspricht also der ursprünglichen Nennquerschnittsfläche an derselben Stelle des modifizierten Längenabschnitts eines Kettengliedschenkels. Durch die Umformung wird die Verschleißfestigkeit der Kettenglieder erhöht, deren Zugfestigkeit wird dadurch jedoch nicht beeinträchtigt.

In einer weiteren vorteilhaften Weiterbildung der Erfindung kann bei einem Kettenglied ein modifiziertes Verschleißvolumen, welches durch die Erstreckung der modifizierten Verschleißzone innenseitig entlang des modifizierten Längenabschnitts ausgebildet ist, einem fehlenden abgeflachten Umformvolumen im Bereich der außenseitigen Querschnittsabflachung desselben modifizierten Längenabschnitts entsprechen.

Der zweidimensionale Zuwachs des Flächeninhalts infolge der Querschnittsvergrößerung im Bereich der modifizierten Verschleißzone korreliert bei einer dreidimensionalen Betrachtungsweise mit einem Verschleißvolumen, das in Längsrichtung des Kettengliedbogens entlang des modifizierten Längenabschnitts durch die mit umgeformtem Material verstärkte modifizierte Verschleißzone gebildet wird.

Vorteilhaft an dieser Variante ist, dass das Umformvolumen innerhalb ein und desselben modifizierten Längenabschnitts konstant ist. Wie vorhin bereits festgehalten bietet eine solche Volumens-Umformung den Vorteil von Materialkonstanz und somit von Gewichtskonstanz der Stahlkette. Es sind weder ein additives Fertigungsverfahren noch aufwendige Gieß- oder Schmiedeverfahren zur Fertigung der Stahlkette erforderlich.

Besonders vorteilhaft kann es sein, wenn bei einer erfindungsgemäßen Stahlkette der modifizierte Rundungsradius entlang des modifizierten Längenabschnitts kleiner als der 1,1-fache Wert des Nennrundungsradius, vorzugsweise vom 1,02-fachen bis 1,09-fachen Wert des Nennrundungsradius, ist.

Gemäß dieser Ausführung ist der modifizierte Rundungsradius r_{M} im Bereich der Kettengliedinnenrundung an der Innenseite des Kettengliedbogens vorteilhaft um weniger als 10% des Nennrundungsradius r im Vergleich zum Nennrundungsradius r vergrößert und beträgt vorzugsweise von 102% bis 109% des Nennrundungsradius r.

Die Obergrenze der zweckmäßigen Vergrößerung des modifizierten Rundungsradius r_{M} im Vergleich zum Nennrundungsradius r mit weniger als 10% ergibt sich aus dem Umstand, dass die innere Kettengliedbreite b_{I} eines Kettenglieds üblicherweise mit etwa 120% bzw. dem 1,2-fachen Wert des Nenndurchmessers d im Falle einer Rundstahlkette bemessen wird. Je nach ausgewählter Nennquerschnittsgeometrie kann bei einer Profilstahlkette eine dem Nenndurchmesser d entsprechenden Nennquerschnittsbreite d_{P} dem nominalen Nenndurchmesser einer Rundstahlkette entsprechen.

Der vergrößerte modifizierte Rundungsradius r_{M} ist also zweckmäßiger Weise so zu bemessen, dass eine hohe Raumbeweglichkeit der gelenkig miteinander verbundenen Kettenglieder gewährleistet bleibt und der vergrößerte modifizierte Rundungsradius r_{M} etwas kleiner als die halbe innere Kettengliedbreite b_{I} ist. Damit bleibt eine solche Stahlkette auch im Belastungsfall beweglich und ein Verklemmen der Kettenglieder bei Belastung der Kette wird vermieden.

Mit diesen vergleichsweise moderaten Querschnittsmodifikationen wird vorteilhaft verhindert, dass der vergrößerte modifizierte Rundungsradius seitlich in Querrichtung das modifizierte Kettenglied überragt. Ein bei Lasteinleitung infolge Zugbeanspruchung der Kette nachteiliger, ungleichmäßiger Spannungsverlauf mit lokalen Spannungsspitzen im jeweiligen Kettenglied kann somit erfolgreich vermieden werden. Aufgrund der moderaten Querschnittsmodifikationen ohne seitliche Verdickungen wird bei der erfindungsgemäßen Rundstahlkette ein möglichst gleichmäßiger Spannungsverlauf bei Belastung gewährleistet.

Da eine Vergrößerung des modifizierten Rundungsradius r_{M} im Vergleich zum Nennrundungsradius jedoch mit der dritten Potenz in die Berechnung des Verschleißvolumens eingeht, ist die Erhöhung der Verschleißfestigkeit infolge der erfindungsgemäßen Querschnittsmodifikationen dennoch signifikant.

In einer Weiterbildung der Erfindung kann bei einer Stahlkette die umgeformte modifizierte Verschleißzone auf zwei Verschleißzonenabschnitte aufgeteilt sein, wobei die zwei Verschleißzonenabschnitte jeweils an der Innenseite des Kettengliedbogens sowie zueinander spiegelsymmetrisch in Bezug zur Mittelebene des Kettenglieds, welche sich jeweils in Längsrichtung sowie in Hochrichtung eines Kettenglieds erstreckt und im Wesentlichen senkrecht zur außenseitigen Querschnittsabflachung des Kettenglieds steht, angeordnet sind.

Bei einem Kettenglied, das eine im Wesentlichen ovale Ringform aufweist, und das in einem dreidimensionalen Koordinatensystem so positioniert ist, dass die Ebene des Kettenglieds in der X-Z-Ebene liegt, wobei sich die Kettengliedschenkel in Richtung der X-Achse, somit in Längsachsenrichtung, erstrecken, und die Kettengliedbögen sich ausgehend von der Längsachsenrichtung (X-Achse) in Richtung der Z-Achse, somit in Hochrichtung erstrecken, fällt definitionsgemäß die Symmetrieebene bzw. Mittelebene ε_{M} dieses Kettenglieds mit der X-Z-Ebene zusammen. Senkrecht zu dieser X-Z-Ebene steht die Y-Achse, die die seitliche Querrichtung bzw. die seitliche Erstreckung des Kettenglieds in Querrichtung angibt.

Dazu wird das Umformvolumen auf zwei Teilvolumina aufgeteilt, wobei das erste Teilvolumen in Umfangsrichtung bzw. in Tangentialrichtung im Uhrzeigersinn entlang eines Kreisbogens von der Außenseite an die Innenseite des Kettengliedbogens verdrückt wird. Das zweite Teilvolumen wird in Umfangsrichtung bzw. in Tangentialrichtung gegen den Uhrzeigersinn entlang derselben Kreisbogenlänge in Gegenrichtung ebenfalls an die Innenseite des Kettengliedbogens verdrückt. Die beiden Teilvolumina bilden jeweils Verschleißzonenabschnitte, die zueinander spiegelsymmetrisch in Bezug zur Mittelebene des Kettenglieds an der Innenseite des Kettengliedbogens angeordnet sind.

Durch die symmetrische Umformung des abgetragenen Abflachungsvolumens als zwei Teilvolumina, die jeweils an der Innenseite des Kettengliedbogens angeordnet sind, werden symmetrisch besonders exakt geformte modifizierte Kettenglieder geschaffen. Besonders bei Förderketten und Hebezeugketten, welche beispielsweise über Kettenräder und Umlenkräder oftmals unter Last abgewinkelt werden, führt diese besonders symmetrische Gestaltung der einzelnen Kettenglieder zu einer weiteren Verbesserung der Verschleißlebensdauer solcher Stahlketten mit modifiziertem Querschnitt.

In einer besonders vorteilhaften Ausführung kann sich bei einer erfindungsgemäßen Stahlkette ein modifizierter Längenabschnitt mit einem modifizierten Querschnitt zumindest entlang eines ganzen Kettengliedbogens erstrecken und sich gegebenenfalls zusätzlich entlang von an den Kettengliedbogen daran angrenzenden Abschnitten der Kettengliedschenkel erstrecken, wobei die Länge des modifizierten Längenabschnitts einer Kreisbogenlänge eines Zentriwinkels von 180° bis 205° entspricht.

In dieser Ausführung erstreckt sich ein modifizierter Längenabschnitt zumindest entlang des Halbkreises eines Kettengliedbogens mit einem Zentriwinkel von 180° und kann sich gegebenenfalls auch noch jeweils entlang von an einen Kettengliedbogen angrenzenden Abschnitten der Kettengliedschenkel erstrecken. Vorteilhaft sind also Übergangsabschnitte an den Längsrändern eines modifizierten Längenabschnitts am Übergang zu den jeweils angrenzenden Längenabschnitten ohne Querschnittsmodifikation so angeordnet, dass sie außerhalb des jeweiligen verschleißbeanspruchten Gelenkbereichs zwischen benachbarten Kettengliedern liegen, in dem der stärkste Verschleiß der Ketten auftritt. Zumindest ein Abschnitt der Kettengliedschenkel bleibt jedoch frei von einer Querschnittsmodifikation.

In einer Weiterbildung der Erfindung kann bei einer Stahlkette eine Querschnittsabflachung, die entlang eines modifizierten Längenabschnitts an der Außenseite des Kettengliedbogens angeordnet ist, jeweils unter Bildung eines außenseitigen Übergangsradius in einen angrenzenden Längenabschnitt mit konstantem Nennquerschnitt und ohne Querschnittsmodifikation übergehen, wobei der außenseitige Übergangsradius an den Längsenden einer Querschnittsabflachung vorzugsweise zwischen dem 0,2- fachen und dem 0,3-fachen Wert des Nenndurchmessers beträgt, und besonders bevorzugt der 0,27-fache Wert des Nenndurchmessers ist.

Je nach ausgewählter Nennquerschnittsgeometrie kann bei einer Profilstahlkette eine dem Nenndurchmesser d entsprechenden Nennquerschnittsbreite d_{P} dem nominalen Nenndurchmesser einer Rundstahlkette entsprechen.

Besonders vorteilhaft kann sein, wenn bei einer erfindungsgemäßen Rundstahlkette ein Abschnitt mit einer modifizierten Verschleißzone, die entlang eines modifizierten Längenabschnitts an der Innenseite des Kettengliedbogens angeordnet ist, jeweils unter Bildung eines innenseitigen Übergangsradius in einen angrenzenden Längenabschnitt mit konstantem Nennquerschnitt und ohne Querschnittsmodifikation übergeht, wobei der innenseitige Übergangsradius an den Längsenden des modifizierten Längenabschnitts vorzugsweise zwischen dem 0,2- fachen und dem 0,3-fachen Wert des Nenndurchmessers beträgt, und besonders bevorzugt der 0,27-fache Wert des Nenndurchmessers ist.

Es hat sich in eigenen Vorversuchen gezeigt, dass eine solche Gestaltung der Übergangsbereiche zwischen einem modifizierten Längenabschnitt und den jeweils angrenzenden Längenabschnitten ohne Querschnittsmodifikation besonders vorteilhaft ist, um unerwünschte Spannungsspitzen in den Kettengliedern bei Belastung zu vermeiden. Durch die Wahl eines entsprechenden außenseitigen und/oder innenseitigen Übergangsradius kann der Spannungsverlauf in den einzelnen Kettengliedern weiter vergleichmäßigt werden und somit die Verschleißfestigkeit und Lebensdauer der Rundstahlkette weiter erhöht werden.

Besonders wirtschaftlich kann es sein, wenn bei einer erfindungsgemäßen Stahlkette jedes der mehreren Kettenglieder im Wesentlichen gleich geformt ist. Die wirtschaftlichen Vorteile dieser Ausführung liegen insbesondere im Vergleich zu aufwendig gestalteten Ketten, bei denen beispielsweise jedes zweite Kettenglied alternierend als Flachglied ausgeführt ist, auf der Hand. Weiters ist die Herstellung einer solchen Stahlkette, bei der jedes Kettenglied im Wesentlichen gleich geformt ist, besonders effizient und kostengünstig. Einzelne Herstellungsschritte können jeweils mit ein und derselben Vorrichtung durchgeführt werden und es wird nicht der Einsatz mehrerer alternativer Herstellungsschritte samt den jeweils dazu erforderlichen individuellen mehreren Vorrichtungen benötigt.

Besonders vorteilhaft kann sein, wenn bei einer erfindungsgemäßen Stahlkette der modifizierte Querschnitt eines Kettenglieds jeweils ausschließlich innerhalb zweier zueinander paralleler Hüllebenen liegt, welche außenseitig dieses Kettenglieds angeordnet sind und sich jeweils in Längsrichtung sowie in Hochrichtung dieses Kettengliedes erstrecken, wobei die beiden Hüllebenen höchstens in einem Abstand eines Schweißstellendurchmessers oder einer Schweißstellendicke im Bereich der Schweißstelle voneinander beabstandet sind.

Die genannten Hüllebenen ε₁, ε₂ sind weder Teil eines Kettenglieds noch Teil der erfindungsgemäßen Rundstahlkette, sondern dienen lediglich zur Veranschaulichung und geometrischen Überprüfbarkeit der modifizierten Geometrie jedes Kettengliedes. Die Bedingung, dass die beiden Hüllebenen, innerhalb derer der modifizierte Querschnitt liegt, in einem Abstand des Schweißstellendurchmessers d_{S} oder der Schweißstellendicke d_{S} parallel voneinander beabstandet sind, wurde deshalb gewählt, um gegebenenfalls eine geringfügige Ovalisierung im Bereich der Kettengliedbögen während des Biegevorgangs in Folge von unvermeidbarer Biegeknickung zu berücksichtigen.

Wie eingangs bereits festgehalten wurde, kann der Schweißstellendurchmesser d_{S} bei Rundstahlketten im Bereich der Schweißstelle infolge von Widerstands- oder Abbrennstumpfschweißen etwas größer sein als der Nenndurchmesser d des Ausgangsmaterials. Gemäß den Bestimmungen in der Normung ist - abhängig vom Gütegrad der jeweiligen Rundstahlkette - der Schweißstellendurchmesser d_{S} kleiner oder gleich dem 1,10-fachen Wert des Nenndurchmessers d, vorzugsweise kleiner oder gleich dem 1,08-fachen Wert des Nenndurchmessers d des Rundstahl-Ausgangsmaterials.

Im Falle des Einsatzes von Profilstahlmaterial zur Herstellung einer Stahlkette gelten im Prinzip dieselben Vereinbarungen, wobei anstelle eines Schweißstellendurchmessers d_{S} eine entsprechend korrespondierende Schweißstellendicke d_{S} im Bereich der Schweißstelle eines solchen aus Profilstahl gefertigten Kettenglieds herangezogen wird. Die Schweißstellendicke d_{S} im Bereich der Schweißstelle ist daher - je nach gewählter Profilquerschnittsgeometrie-kleiner oder gleich dem 1,10-fachen Wert der nominalen Nennprofilbreite des Profils, vorzugsweise kleiner oder gleich dem 1,08-fachen Wert der nominalen Nennprofilbreite des Profilstahl-Ausgangsmaterials.

Weiters ist bekannt, dass es insbesondere beim Einsatz von Walzstäben als Ausgangsmaterial zur Kettengliedfertigung, welches im Vergleich zu Walzdraht einen größeren nominalen Ausgangsdurchmesser bzw. eine größere Querschnittsfläche aufweist, während des Biegevorgangs der Kettenglieder zu einer unbeabsichtigten bzw. unvermeidbaren, geringfügigen Ovalisierung in Folge von Biegeknickung der ursprünglichen Querschnittsgeometrie kommen kann. Ein Grenzwert, ab welchem Nenndurchmesser verstärkt Biegeknickung beim Biegen des Ausgangsmaterials auftreten kann, lässt sich nicht exakt angeben, da dies neben dem Nenndurchmesser des Ausgangsmaterials auch vom gewählten Biegeradius des Kettenglieds abhängt. Je kleiner der Biegeradius eines Kettenglieds gewählt wird, umso eher besteht die Gefahr von Biegeknickung des Ausgangsmaterials während des Biegevorgangs. Als Richtwert kann beispielsweise ein Nenndurchmesser eines Walzstab-Ausgangsmaterials ab etwa 26 mm angesehen werden, ab dem es beim Biegen zu einer unvermeidbaren Biegeknickung kommen kann. Durch eine solche unvermeidbare Biegeknickung kann es im Bereich der Kettengliedbögen aus einem Rundstahlmaterial um bis zu etwa 3% Abweichungen von der kreisrunden Querschnittsform kommen. Für jene Fälle, in denen konventionelle, dünnere Walzdrähte mit einer kreisförmigen Querschnittsgeometrie und mit einem Nenndurchmesser kleiner als etwa 26 mm als Rundstahlmaterial zur Kettenerzeugung eingesetzt werden, tritt eine solche geringfügige Ovalisierung infolge des Biegevorgangs üblicherweise nicht auf. Vergleichbar kann es auch beim Einsatz von Profilstahlmaterial je nach gewählter Profilgeometrie zu einer geringen Biegeknickung des Profilmaterials im Bereich der Kettengliedbögen kommen.

Zusammenfassend wird in dieser Ausführungsvariante mit dem gewählten Kriterium, dass im Fall der Erfindung die beiden parallelen Hüllebenen, innerhalb derer der modifizierte Querschnitt eines Kettengliedes liegt, in einem Abstand des Schweißstellendurchmessers oder der Schweißstellendicke d_{S} voneinander beabstandet sind, zum Ausdruck gebracht, dass die bewusste Querschnittsmodifizierung der Kettenglieder im Falle der erfindungsgemäßen Stahlkette ohne seitlich abstehende Verdickungen erfolgt. Eine mögliche geringfügige Ovalisierung des Ausgangsstahlmaterials infolge des Biegevorgangs - abhängig unter anderem vom gewählten Nenndurchmesser bzw. der Profilgeometrie, dem Biegeradius der Kettenglieder und der Qualität des eingesetzten Ausgangsmaterials - kann jedoch auch im Falle einer erfindungsgemäßen Rundstahlkette unvermeidbar sein. Gleiches gilt auch für das erfindungsgemäße Herstellungsverfahren.

In einer besonders vorteilhaften Ausführungsform kann bei einer Stahlkette gemäß der Erfindung, insbesondere beim Einsatz von Walzdraht als Ausgangsmaterial, der modifizierte Querschnitt so gestaltet sein, dass dieser modifizierte Querschnitt eines Kettenglieds ausschließlich innerhalb zweier Hüllebenen liegt, welche außenseitig eines Kettengliedbogens dieses Kettenglieds angeordnet sind und sich jeweils in Längsrichtung sowie in Hochrichtung dieses Kettenglieds erstrecken. Bei einem Kettenglied, das aus Rundstahl gefertigt ist, sind die beiden Hüllebenen höchstens in einem Abstand eines Nenndurchmessers d der Nennquerschnittsgeometrie des im Wesentlichen kreisförmigen Ausgangsmaterials voneinander beabstandet. Bei einem Kettenglied, das aus Profilstahl hergestellt ist, sind die beiden Hüllebenen höchstens in einem Abstand einer Nennquerschnittsbreite d_{P} zwischen zwei in Querrichtung des Kettengliedbogens einander gegenüberliegenden Profilflanken der Nennquerschnittsgeometrie des profilierten Ausgangsmaterials voneinander beabstandet.

Wie vorhin bereits dargelegt hängt es maßgeblich vom jeweils ausgewählten Ausgangsmaterial ab, ob dieses beim Biegen geringfügig infolge von Knicken ovalisiert wird oder nicht. Beim Einsatz von dünnen Walzdrähten mit kleineren Nenndurchmessern kann es gelingen, dass diese beim Biegevorgang nicht knicken und daher nicht ovalisieren. In einem solchen Fall kann es gelingen, die Umformungen des modifizierten Querschnitts entlang der modifizierten Längenabschnitte im Bereich der Kettengliedbögen so zu gestalten, dass der modifizierte Querschnitt innerhalb zweier Hüllebenen liegt, welche jeweils an den betreffenden Kettengliedbogen angrenzen und welche parallel zueinander sowie in einem Abstand des Nenndurchmessers bzw. einer Nennbreite eines Profilstahlmaterials einander gegenüberliegend angeordnet sind. Auch in diesem Fall sind die gedachten Hüllebenen weder Teil des einzelnen Kettenglieds, noch Teil der erfindungsgemäßen Stahlkette. Vorteilhaft wird in dieser Ausführungsform eine Stahlkette geschaffen, die besonders schmale Kettenglieder aufweist, bei denen die modifizierten Querschnitte nicht seitlich nach außen in Querrichtung des Kettenglieds überragen, die aber dennoch eine verbesserte Verschleißfestigkeit aufgrund des vergrößerten modifizierten Rundungsradius r_{M} im Bereich des gerundeten modifizierten Umfangsabschnitts aufweisen.

Besonders zweckmäßig kann es sein, wenn bei einer Stahlkette gemäß der Erfindung ein Kettenglied mit modifizierten Querschnitten entlang von modifizierten Längenabschnitten dieselbe innere Kettengliedbreite, äußere Kettengliedbreite sowie Kettenteilung aufweist wie ein herkömmliches Kettenglied einer vergleichbaren Stahlkette mit konstantem Nennquerschnitt sowie ohne Querschnittsmodifikation.

In dieser Ausführungsvariante unterscheidet sich eine erfindungsgemäße Stahlkette mit Kettengliedern mit modifiziertem Querschnitt gegenüber einer herkömmlichen Kette ohne Querschnittsmodifikation, also mit Kettengliedern mit einem - mit Ausnahme im Bereich der Schweißstelle - im Wesentlichen konstanten Nennquerschnitt, zwar durch die verbesserte Verschleißfestigkeit und die vergrößerten modifizierten Rundungsradien an den Innenseiten der Kettengliedbögen. Die geometrischen Größen der inneren Kettenbreite, der äußeren Kettenbreite sowie der Kettenteilung bleiben in dieser Ausführung jedoch bei einer erfindungsgemäßen Stahlkette mit Kettengliedern mit modifiziertem Querschnitt gegenüber einer herkömmlichen Stahlkette ohne Querschnittsmodifikation unverändert. Vorteilhaft kann somit eine modifizierte Stahlkette mit verbesserter Verschleißfestigkeit in bereits bestehenden Hebe- und Fördereinrichtungen anstelle von herkömmlichen Stahlketten eingesetzt werden, ohne dass aufgrund des Kettenwechsels irgendwelche Adaptionen an den Hebe- oder Fördereinrichtungen nötig wären.

Die eingangs genannten Aufgaben werden auch mit einem erfindungsgemäßen Verfahren zur Herstellung einer Stahlkette in Form einer Rundstahlkette oder Profilstahlkette gelöst, wobei das Verfahren eine Abfolge der folgenden Schritte umfasst:
a) Bereitstellen von Walzstahlmaterial, insbesondere von Walzdrähten oder Walzstäben, in Form von Rundstahlmaterial mit einem im Wesentlichen kreisförmigen Nennquerschnitt sowie einem Nenndurchmesser, oder in Form von Profilstahlmaterial mit einem profilierten Nennquerschnitt;
b) kontinuierliches Zuführen des bereitgestellten Walzstahlmaterials in Längsachsenrichtung in eine Umformvorrichtung;
c) Abschnittsweises Umformen des Walzstahlmaterials jeweils entlang von modifizierten Längenabschnitten, die alternierend mit zwischenliegenden Längenabschnitten ohne Querschnittsmodifikation in Längsrichtung des Rundstahlmaterials angeordnet werden, wobei dem Walzstahlmaterial jeweils entlang eines modifizierten Längenabschnittes durch Verformen ein modifizierter Querschnitt aufgeprägt wird, indem entlang einer Längsseite des modifizierten Längenabschnitts durch Verdrücken eine Querschnittsabflachung hergestellt wird und das dabei abgeflachte Umformvolumen als zusätzliches Verschleißvolumen solcherart an der der Querschnittsabflachung gegenüberliegenden Längsseite desselben modifizierten Längenabschnitts angeordnet wird, dass zumindest in einem Abschnitt mit einer gerundeten Umfangsfläche ein Nennrundungsradius vergrößert und zumindest ein Abschnitt mit einer modifizierten gerundeten Umfangsfläche mit einem im Vergleich zum Nennrundungsradius vergrößerten modifizierten Rundungsradius erhalten wird;
d) Ablängen des abschnittsweise umgeformten Walzstahlmaterials zu Kettenpins mit einer Gesamtlänge, die der Längensumme von zwei modifizierten Längenabschnitten sowie von zwei Längenabschnitten ohne Querschnittsmodifikation entspricht, wobei jeder Kettenpin im Bereich der halben Länge des jeweils zweiten Längenabschnitts ohne Querschnittsmodifikation abgelängt wird;
e) Biegen jedes Kettenpins mittels einer Biegevorrichtung zu einem vorgebogenen Kettenglied, wobei die zwei modifizierten Längenabschnitte mit modifiziertem Querschnitt jeweils so angeordnet werden, dass diese im Bereich der Kettengliedbögen liegen, und die zwischenliegenden Längenabschnitte ohne Querschnittsmodifikation im Bereich der Kettengliedschenkel liegen, wobei die Querschnittsabflachungen an den Außenseiten der Kettengliedbögen angeordnet werden sowie ein im Vergleich zum Nennrundungsradius vergrößerter modifizierter Rundungsradius im Bereich der Kettengliedinnenrundung an der Innenseite des Kettengliedbogens angeordnet wird;
f) Ineinanderfügen mehrerer vorgebogener Kettenglieder zu einer vorgebogenen Kette;
g) Verschweißen der freien Enden jedes vorgebogenen Kettenglieds zu einem fertigen Kettenglied in Ringform, wobei einer der Kettengliedschenkel eine Schweißstelle mit einem Schweißstellendurchmesser oder einer Schweißstellendicke aufweist.

Die eingangs genannten Vorteile und vorteilhaften Effekte der erfindungsgemäßen Rundstahlkette gelten sinngemäß auch für das erfindungsgemäße Herstellungsverfahren. Insbesondere ist beim erfindungsgemäßen Herstellungsverfahren von Vorteil, dass sich dieses im Wesentlichen nur durch den zusätzlichen Verfahrensschritt c) gegenüber dem derzeit etablierten Biegeverfahren zur Stahlkettenherstellung unterscheidet. Die anschließenden Verfahrensschritte d) bis g), also das Ablängen von Kettenpins, das Biegen jedes Kettenpins, das Ineinanderfügen mehrerer vorgebogener Kettenglieder sowie das abschließende Verschweißen der freien Kettengliedenden, kann wie bisher mit denselben Vorrichtungen ohne zusätzlich erforderliche Adaptionen erfolgen.

Zweckmäßig erfolgt das abschnittsweise Umformen in Verfahrensschritt c) so, dass dem Walzstahlmaterial jeweils entlang eines modifizierten Längenabschnittes durch Verformen ein modifizierter Querschnitt aufgeprägt wird, indem entlang einer Längsseite des modifizierten Längenabschnitts durch Verdrücken eine Querschnittsabflachung hergestellt wird und das dabei abgeflachte Umformvolumen als zusätzliches Verschleißvolumen an der der Querschnittsabflachung gegenüberliegenden Längsseite desselben modifizierten Längenabschnitts angeordnet wird. Dabei wird zumindest in einem Abschnitt mit einer gerundeten Umfangsfläche ein Nennrundungsradius vergrößert und zumindest ein Abschnitt mit einer modifizierten gerundeten Umfangsfläche mit einem im Vergleich zum Nennrundungsradius vergrößerten modifizierten Rundungsradius erhalten. Die abschnittsweise Umformung entlang der modifizierten Längenabschnitte zu einem im Vergleich zum ursprünglichen Nennquerschnitt modifizierten Querschnitt erfolgt also zu Beginn noch am stabförmigen Walzstahlmaterial. Erst nach dem Umformen und Ablängen des abschnittsweise umgeformten Stahlmaterials erfolgt das Biegen jedes Kettenpins, bei dem es - wie zuvor bereits festgehalten - je nach Nennquerschnitt und Qualität des Ausgangsmaterials auch zu einer unvermeidbaren, geringen Ovalisierung infolge Biegeknickung kommen kann.

Besonders vorteilhaft kann sein, wenn bei einem Verfahren gemäß der Erfindung in Schritt c) das Walzstahlmaterial abschnittsweise durch Kaltfließ-, Halbwarm- oder Warmpressen oder durch Warmrollen umgeformt wird. Das abschnittsweise Umformen des Walzstahlmaterials mit geeigneten Präge-, Press-, Roll- oder Biegemaschinen ist kostengünstiger und einfacher möglich als dies beispielsweise bei aufwendigen Schmiede-, Gieß-, oder Sinterprozessen oder additiven Fertigungsprozessen der Fall ist.

In einer zweckmäßigen Verfahrensvariante kann in Schritt c) das Walzstahlmaterial abschnittsweise so umgeformt werden, dass der modifizierte Rundungsradius entlang des modifizierten Längenabschnitts größer oder gleich dem 1,01-fachen Wert sowie kleiner als der 1,1-fache Wert des Nennrundungsradius (r), vorzugsweise vom 1,02-fachen bis 1,09-fachen Wert des Nennrundungsradius (r), eingestellt wird.

Wie bereits zuvor festgehalten geht eine Vergrößerung des modifizierten Rundungsradius r_{M} im Vergleich zum Nennrundungsradius r mit der dritten Potenz in die Berechnung des Verschleißvolumens ein. Eine Vergrößerung des Verschleißvolumens und damit einhergehend eine Erhöhung der Verschleißfestigkeit infolge der erfindungsgemäßen Querschnittsmodifikationen sind daher auch bei einer nur moderaten Vergrößerung des modifizierten Rundungsradius r_{M} signifikant.

In einer weiteren Ausführung der Erfindung kann es von Vorteil sein, wenn bei einem Verfahren in Schritt c) das Rundstahlmaterial solcherart umgeformt wird, dass beim fertigen Kettenglied der modifizierte Querschnitt innerhalb zweier zueinander paralleler Hüllebenen liegt, welche jeweils außenseitig an einem Kettenglied angrenzend angeordnet sind und sich jeweils in Längsrichtung sowie in Hochrichtung dieses Kettengliedes erstrecken, wobei die beiden Hüllebenen zueinander in einem Abstand des Schweißstellendurchmessers bzw. der Schweißstellendicke d_{S} im Bereich der Schweißstelle einander gegenüberliegend angeordnet werden.

Mit dem Kriterium, dass im Fall der Erfindung die beiden gedachten parallelen Hüllebenen, innerhalb derer der modifizierte Querschnitt beim fertigen Kettenglied liegt, in einem Abstand des Schweißdurchmessers bzw. der Schweißstellendicke d_{S} voneinander beabstandet sind, wird zum Ausdruck gebracht, dass die bewusste Querschnittsmodifizierung der Kettenglieder ohne seitlich abstehende Verdickungen erfolgt, jedoch eine mögliche geringe Ovalisierung des Walzstahlmaterials infolge des Biegevorgangs unvermeidbar sein kann. Hinsichtlich der damit verbundenen Vorteile wird auf die weiter vorne genannten Abschnitte zur erfindungsgemäßen Stahlkette verwiesen.

Insbesondere beim Einsatz von Walzdraht als Ausgangsstahlmaterial kann bei einem erfindungsgemäßen Verfahren in Schritt c) das Walzstahlmaterial solcherart umgeformt werden, dass beim fertigen Kettenglied der modifizierte Querschnitt innerhalb zweier Hüllebenen liegt, welche jeweils in Längsrichtung an einen Kettengliedbogen angrenzend sowie parallel zueinander in einem Abstand des Nenndurchmessers einander gegenüberliegend angeordnet werden.

In dieser Verfahrensvariante, die sich insbesondere für den Einsatz von Walzdraht als Rundstahlmaterial für die Kettenfertigung eignet, wird eine Rundstahlkette mit besonders schmalen Kettengliedern gefertigt, deren Kettengliedbreite seitlich in Querrichtung gesehen trotz der modifizierten Querschnitte nicht den Abstand des Nenndurchmessers bzw. der nominalen Nennprofilbreite des Profils überragt. Auch hierzu wird hinsichtlich der damit verbundenen Vorteile auf die weiter vorne genannten Abschnitte zur erfindungsgemäßen Stahlkette verwiesen.

Die Erfindung wird nun anhand von beispielhaften Ausführungsformen unter Bezugnahme auf die Zeichnungen näher erläutert. In den schematischen Zeichnungen zeigen:
- **Fig. 1** in einer Seitenansicht das abschnittsweise Umformen von Walzstahlmaterial in Form von Rundstahlmaterial in einer Umformvorrichtung;
- **Fig. 2** in einer Seitenansicht das Ablängen des abschnittsweise umgeformten Rundstahlmaterials in einer Ablängvorrichtung;
- **Fig. 3** in einer isometrischen Ansicht schräg von vorne einen abgelängten Kettenpin;
- **Fig. 4** in einer Frontalansicht das Biegen eines Kettenpins in einer Biegevorrichtung zu einem vorgebogenen Kettenglied;
- **Fig. 5** in einer Frontalansicht das Verschweißen der freien Enden eines vorgebogenen Kettenglieds;
- **Fig. 6** in einer isometrischen Ansicht schräg von vorne eine erfindungsgemäße Rundstahlkette mit modifizierten Kettengliedern;
- **Fig. 7** in einer Frontalansicht in Längsrichtung die in **Fig. 6** gezeigte Rundstahlkette;
- **Fig. 7A** eine Schnittansicht der Rundstahlkette gemäß der in **Fig. 7** skizzierten Schnittebene A-A;
- **Fig. 7B** eine Detailansicht des in **Fig. 7A** strichpunktiert markierten Details B;
- **Fig. 8** in einer Frontalansicht in Längsachsenrichtung einen Kettenpin;
- **Fig. 9** eine Schnittansicht des in **Fig. 8** gezeigten Kettenpins gemäß der skizzierten Schnittebene C-C;
- **Fig. 10** eine Schnittansicht des in **Fig. 8** gezeigten Kettenpins gemäß der in **Fig. 9** skizzierten Schnittebene E-E;
- **Fig. 11** eine Schnittansicht des in **Fig. 8** gezeigten Kettenpins gemäß der in **Fig. 9** skizzierten Schnittebene F-F;
- **Fig. 12** in einer Frontalansicht in Längsrichtung Kettenglieder einer erfindungsgemäßen Rundstahlkette;
- **Fig. 13** in einer isometrischen Ansicht schräg von vorne teilweise freigeschnittene Kettenglieder einer aus dem Stand der Technik bekannten Profilstahlkette;
- **Fig. 14** in einer isometrischen Ansicht schräg von vorne Kettenglieder einer erfindungsgemäßen Profilstahlkette;
- **Fig. 15** in einer Schnittansicht von vorne einen Nennquerschnitt mit einer Nennquerschnittsfläche und einer Nennquerschnittsgeometrie durch einen Kettengliedbogen eines in **Fig. 13** gezeigten Kettengliedes einer an sich bekannten Profilstahlkette;
- **Fig. 16** in einer Schnittansicht von vorne einen modifizierten Querschnitt mit einer modifizierten Querschnittsgeometrie und einer modifizierten Querschnittsfläche im Bereich eines modifizierten Längenabschnitts durch einen Kettengliedbogen eines Kettengliedes einer erfindungsgemäßen Profilstahlkette gemäß **Fig. 14****.**

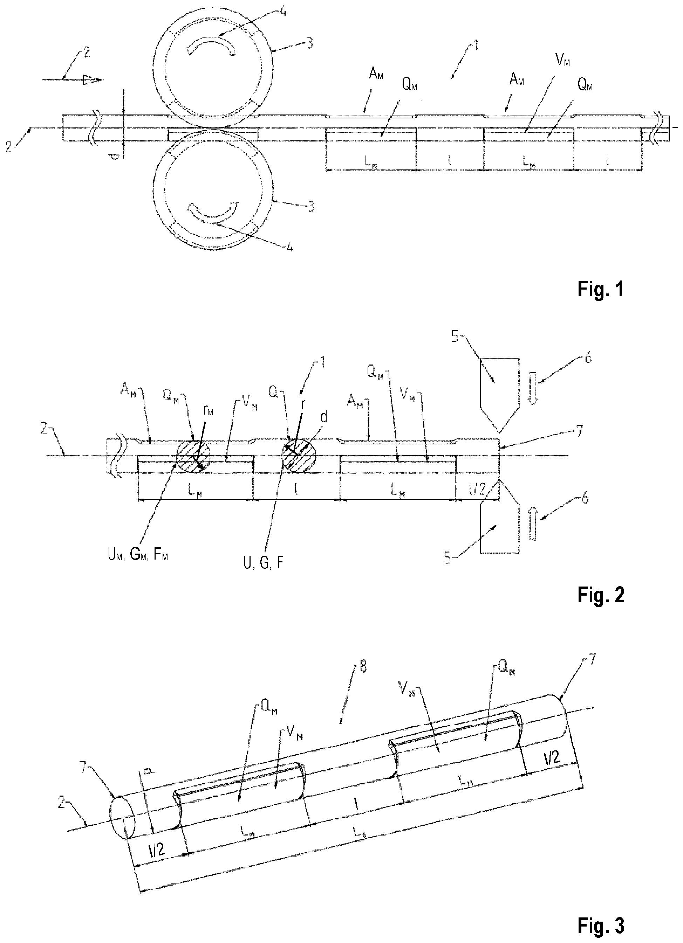

Im Folgenden wird anhand der **Figuren 1 bis 5** das erfindungsgemäße Herstellungsverfahren erläutert.

**Fig. 1** zeigt das abschnittsweise Umformen von Walzstahlmaterial 1, hier beispielsweise anhand von Rundstahlmaterial 1, in einer Umformvorrichtung 3. Dazu wird hier Rundstahlmaterial in Form von Walzdrähten oder Walzstäben mit einem konstanten kreisförmigen Nennquerschnitt Q sowie einem Nenndurchmesser d als Ausgangsmaterial für die Kettenproduktion bereitgestellt. Der Nenndurchmesser d entspricht hier dem Doppelten eines Nennradius r, der im Weiteren als Nennrundungsradius r bezeichnet wird. Das hier beispielhaft bereitgestellte Rundstahlmaterial 1 wird in seiner Längsachsenrichtung 2 der Umformvorrichtung 3 zugeführt. Der Pfeil 2 entspricht der Förderrichtung in Längsachsenrichtung 2 des Ausgangsmaterials. In der Umformvorrichtung 3 erfolgt ein abschnittsweises Umformen des Rundstahlmaterials 1 jeweils entlang von modifizierten Längenabschnitten L_{M}, die alternierend mit zwischenliegenden Längenabschnitten 1 ohne Querschnittsmodifikation mit gleichbleibendem, kreisförmigem Nennquerschnitt Q, in Längsrichtung 2 des Rundstahlmaterials 1 angeordnet werden. Dem Rundstahlmaterial 1 wird dabei jeweils entlang eines modifizierten Längenabschnittes L_{M} durch Umformen ein modifizierter Querschnitt Q_{M} aufgeprägt, indem entlang einer Längsseite des modifizierten Längenabschnitts L_{M} durch Verdrücken eine Querschnittsabflachung A_{M} hergestellt wird und ein dabei abgeflachtes Umformvolumen V_{A} als zusätzliches Verschleißvolumen V_{M} mit einem im Vergleich zum Nennrundungsradius r vergrößerten modifizierten Rundungsradius r_{M} an der der Querschnittsabflachung A_{M} gegenüberliegenden Längsseite desselben modifizierten Längenabschnitts L_{M} angeordnet wird. Mit den beiden Pfeilen 4 ist die Drehrichtung 4 der beiden gegengleich rotierenden Dressurrollen der Umformvorrichtung 3 bezeichnet.

**Fig. 2** zeigt das Ablängen des abschnittsweise bereits umgeformten Rundstahlmaterials 1 mit einer Schneidvorrichtung 5, wobei die beiden Pfeile 6 die Bewegungsrichtung 6 des Schneidwerkzeugs anzeigen. Eine Schneidefläche 7 bildet ein freies Ende eines sogenannten Kettenpins 8, wie dieser in **Fig. 3** dargestellt ist. Das Ablängen zu Kettenpins 8 erfolgt dabei mit einer Gesamtlänge L_{G}, die der Längensumme von zwei modifizierten Längenabschnitten L_{M} sowie von zwei Längenabschnitten 1 ohne Querschnittsmodifikation entspricht, solcherart, dass jeder Kettenpin 8 im Bereich der halben Länge 1/2 des jeweils zweiten Längenabschnitts 1 ohne Querschnittsmodifikation bzw. mit kreisförmigem Nennquerschnitt Q abgelängt wird.

In **Fig. 2** sind in Schnittansichten im Bereich des Längenabschnitts 1 ohne Querschnittsmodifikation ein kreisförmiger Nennquerschnitt Q gezeigt mit einer Nennquerschnittsgeometrie G, welche der Kontur eines Kreises mit dem Nenndurchmesser d bzw. mit dem Nennrundungsradius r entspricht, sowie mit einer Nennquerschnittsfläche F, die dem Flächeninhalt der besagten Kreisfläche mit dem Nenndurchmesser d bzw. mit dem Nennrundungsradius r entspricht. Weiters ist im Bereich eines modifizierten Längenabschnitts L_{M} eine Schnittansicht des modifizierten Querschnitts Q_{M} mit einer modifizierten Querschnittsgeometrie G_{M} sowie mit einer modifizierten Querschnittsfläche F_{M} skizziert. Die modifizierten Querschnittsgeometrie G_{M} umfasst eine abgeflachte Kontur im Bereich der Querschnittsabflachung A_{M} sowie einen im Vergleich zum Nennrundungsradius r vergrößerten modifizierten Rundungsradius r_{M} an der der Querschnittsabflachung A_{M} gegenüberliegenden Seite des modifizierten Querschnitts Q_{M}. Ein gerundeter Umfangsabschnitt U mit einem Nennrundungsradius r wird dabei durch Umformen zu einem modifizierten Umfangsabschnitt U_{M} mit einem vergrößerten modifizierten Rundungsradius r_{M} verändert. Dadurch wird die Lage der späteren Schweißstelle zum Verbinden der beiden freien Enden 7 des Kettenpins 8 zu einem ringförmigen Kettenglied auf einem der im Wesentlichen geraden Kettengliedschenkel ohne Querschnittsmodifikation angeordnet.

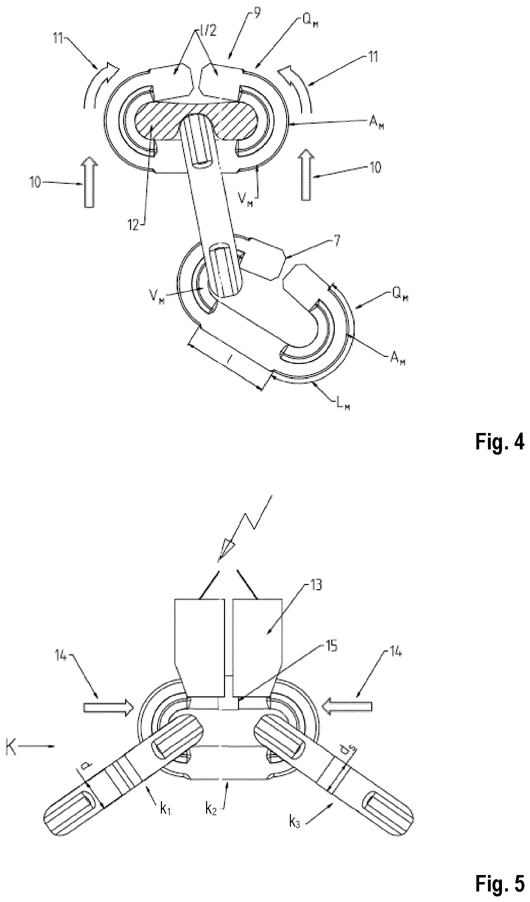

**Fig. 4** zeigt das Biegen eines Kettenpins 8 mittels einer Biegevorrichtung 12 zu einem vorgebogenen Kettenglied 9, wobei die zwei modifizierten Längenabschnitte L_{M} mit modifiziertem Querschnitt Q_{M} jeweils so angeordnet werden, dass diese im Bereich der Kettengliedbögen k_{B} liegen, und die zwischenliegenden Längenabschnitte 1 ohne Querschnittsmodifikation bzw. mit dem ursprünglichen Nennquerschnitt Q im Bereich der Kettengliedschenkel k_{S} liegen. Die Querschnittsabflachungen A_{M} werden dabei an den Außenseiten der Kettengliedbögen k_{B} angeordnet sowie ein im Vergleich zum Nennrundungsradius r vergrößerter modifizierter Rundungsradius r_{M} wird im Bereich der Kettengliedinnenrundung an der Innenseite des Kettengliedbogens k_{B} angeordnet. In **Fig. 4** symbolisieren Pfeile 10 die Druckrichtung 10, mit der der in **Fig. 3** gezeigte Kettenpin 8 gegen die Biegevorrichtung 12 bzw. einen Biegedorn gedrückt wird. Die Pfeile 11 symbolisieren die Biegerichtung 11, in der die freien Enden 7 des Kettenpins 8 um den Biegedorn gebogen werden, um ein vorgebogenes Kettenglied 9 zu erhalten. Es sind bereits mehrere vorgebogene Kettenglieder 9 zu einer vorgebogenen Kette ineinandergefügt.

**Fig. 5** veranschaulicht das Verschweißen der freien Enden 7 eines vorgebogenen Kettenglieds 9 in einer Schweißvorrichtung 13. Mit den Pfeilen 14 ist hier die Pressrichtung 14 symbolisiert, mit der die beiden gegengleichen freien Enden 7 eines vorgebogenen Kettenglieds 9 hier beispielsweise in einer Abbrennstumpfschweißmaschine gegeneinandergepresst werden, wobei eine Schweißstelle 15 mit einem Schweißstellendurchmesser d_{S} gebildet wird. Einer der Kettengliedschenkel k_{S} weist also eine Schweißstelle mit einem Schweißstellendurchmesser d_{S} auf. Die mehreren Kettenglieder k₁, k₂, k₃ sind hier bereits zu einer Rundstahlkette K gelenkig miteinander verbunden.

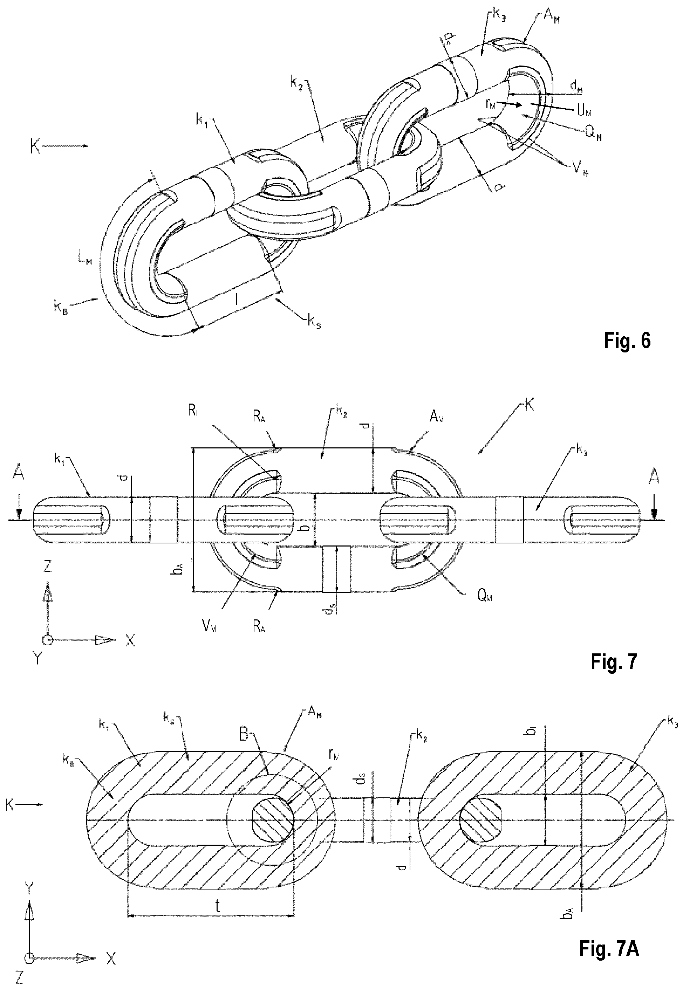

**Fig. 6** zeigt eine erfindungsgemäße Rundstahlkette K mit drei gelenkig miteinander verbundenen Kettengliedern k₁, k₂, k₃. Bei jedem Kettenglied k₁, k₂, k₃ sind jeweils einander gegenüberliegende Kettengliedbögen k_{B} über im Wesentlichen gerade Kettengliedschenkel k_{S} miteinander zu einer Ringform verbunden, wobei einer der Kettengliedschenkel k_{S} eine Schweißstelle mit einem Schweißstellendurchmesser d_{S} aufweist. Jeder Kettengliedbogen k_{B} weist jeweils entlang eines modifizierten Längenabschnitts L_{M} einen im Vergleich zum kreisförmigen Nennquerschnitt Q modifizierten Querschnitt Q_{M} auf. Ein solcher modifizierter Querschnitt Q_{M} weist eine Querschnittsabflachung A_{M} an der Außenseite des Kettengliedbogens k_{B} sowie einen im Vergleich zum Nenndurchmesser d vergrößerten modifizierten Kettendurchmesser d_{M} im Bereich der Kettengliedinnenrundung an der Innenseite des Kettengliedbogens k_{B} auf.

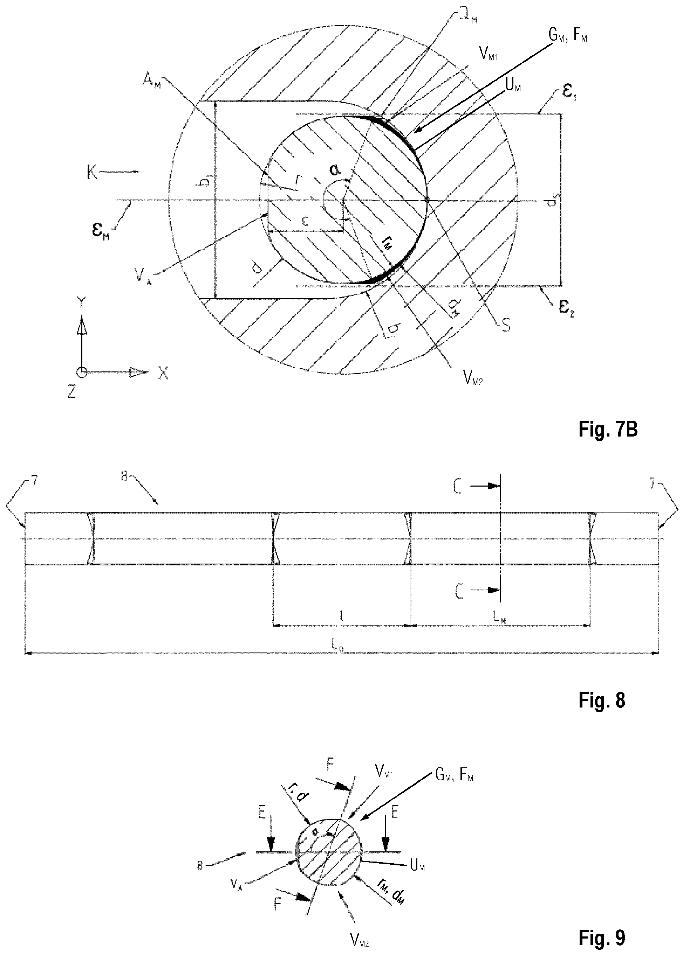

**Fig. 7** zeigt in einer Frontalansicht in Längsrichtung X die in **Fig. 6** gezeigte Rundstahlkette K. Am Rand von **Fig. 7** sind die Raumachsen eines Koordinatensystems dargestellt, wobei X die Längsrichtung X eines Kettenglieds, Y die Querrichtung Y dieses Kettenglieds sowie Z die Hochrichtung Z desselben Kettenglieds symbolisiert. Hier in **Fig. 7** wird also eine Frontalansicht der X-Z-Ebene gezeigt, in der sich das mittlere dargestellte Kettenglied k₂ befindet. Die beiden damit verbundenen Kettenglieder k₁ und k₃ stehen senkrecht dazu und befinden sich jeweils in der X-Y-Ebene. Anhand des mittleren Kettenglieds k₂ sind eine innere Kettengliedbreite b_{I}, eine äußere Kettengliedbreite b_{A} sowie eine Kettenteilung t dargestellt, die für sämtliche Kettenglieder k₁, k₂, k₃ jeweils gleich sind.

Eine Querschnittsabflachung A_{M}, die entlang eines modifizierten Längenabschnitts L_{M} an der Außenseite des Kettengliedbogens k_{B} angeordnet ist, geht jeweils unter Bildung eines außenseitigen Übergangsradius R_{A} in einen angrenzenden Längenabschnitt 1 ohne Querschnittsmodifikation über. Der außenseitige Übergangsradius R_{A} an den Längsenden einer Querschnittsabflachung A_{M} entspricht hier beispielsweise dem 0,27-fachen Wert des Nenndurchmessers d.

Ein Abschnitt mit einem modifizierten Kettendurchmesser d_{M}, der entlang eines modifizierten Längenabschnitts L_{M} an der Innenseite des Kettengliedbogens k_{B} angeordnet ist, geht hier jeweils unter Bildung eines innenseitigen Übergangsradius R_{I} in einen angrenzenden Längenabschnitt 1 ohne Querschnittsmodifikation über, wobei der innenseitige Übergangsradius R_{I} an den Längsenden des modifizierten Längenabschnitts L_{M} beispielsweise entsprechend dem 0,25-fachen Wert des Nenndurchmessers d ausgewählt ist.

**Fig. 7A** zeigt eine Schnittansicht der Rundstahlkette K gemäß der in **Fig. 7** skizzierten Schnittebene A-A. **Fig. 7A** zeigt eine Frontalansicht der X-Y-Ebene, das mittlere dargestellte Kettenglied k₂ steht senkrecht dazu.

**Fig. 7B** zeigt eine Detailansicht des in **Fig. 7A** strichpunktiert markierten Details B. Hier ist in der Schnittansicht des Kettenglieds k₂ besonders schön der modifizierte Querschnitt Q_{M} zu sehen. Der modifizierte Querschnitt Q_{M} mit einer modifizierten Querschnittsgeometrie G_{M} und einer modifizierten Querschnittsfläche F_{M} liegt dabei innerhalb zweier Hüllebenen ε₁, ε₂, die nicht Teil der Rundstahlkette K sind, die sich jeweils in X-Z-Ebenenrichtung erstrecken und die jeweils in Längsrichtung X außenseitig hier an das betreffende Kettenglied k₂ angrenzen. Die beiden Hüllebenen ε₁, ε₂ sind parallel zueinander sowie in einem Abstand des Schweißdurchmessers d_{S} einander gegenüberliegend angeordnet. Mit der Mittelebene ε_{M} des betreffenden Kettenglieds k₂ in Längsrichtung ist hier die X-Z-Ebene, also die Symmetrieebene des Kettenglieds k₂, bezeichnet. Ein entlang eines modifizierten Längenabschnitts L_{M} an der Außenseite des Kettengliedbogens k_{B} des Kettenglieds k₂ im Bereich der Querschnittsabflachung A_{M} abgeflachtes Umformvolumen V_{A} entspricht dabei im Wesentlichen einem zusätzlichen Verschleißvolumen V_{M} bzw. einer modifizierten Verschleißzone V_{M} mit einem im Vergleich zum Nennrundungsradius r vergrößerten modifizierten Rundungsradius r_{M}, das bzw. die an der Innenseite des Kettengliedbogens k_{B} entlang desselben modifizierten Längenabschnitts L_{M} angeordnet ist.

Das umgeformte Material V_{A}, welches im Bereich der Querschnittsabflachung A_{M} fehlt, ist hier so positioniert, dass die modifizierte Verschleißzone V_{M} von zwei Verschleißzonenabschnitten V_{M1}, V_{M2} gebildet wird, die jeweils an der Innenseite des Kettengliedbogens k_{B} angeordnet sind. Überdies sind die beiden Verschleißzonenabschnitte V_{M1}, V_{M2} zueinander spiegelsymmetrisch in Bezug zur Mittelebene ε_{M} angeordnet, wobei sich die Mittelebene ε_{M} in Längsrichtung X sowie in Hochrichtung Z des betrachteten Kettenglieds k₂ erstreckt.

Bei Betrachtung der modifizierten Verschleißzone V_{M} als mit umgeformtem Material verstärkte zusätzliche Verschleißschicht entlang eines modifizierten Längenabschnitts L_{M} entspricht die modifizierte Verschleißzone V_{M} einem umgeformten zusätzlichen Verschleißvolumen V_{M}, dass hier auf zwei Teilvolumina V_{M1}, V_{M2} aufgeteilt ist. Die zwei Teilvolumina V_{M1}, V_{M2} sind hier an der Innenseite des Kettengliedbogens k_{B} sowie zueinander spiegelsymmetrisch in Bezug zur Mittelebene ε_{M} in X-Z-Ebenen-Richtung des Kettenglieds k₂ angeordnet.

Die Querschnittsabflachung A_{M} ist in der Schnittansicht von **Fig. 7B** durch die strichliert gezeichnete ursprüngliche Kontur des Ausgangsmaterials mit einem Nenndurchmesser d und mit einem Nennrundungsradius r veranschaulicht. Durch die Querschnittsabflachung A_{M} wird in diesem Abschnitt an der Außenseite des Kettengliedbogens k_{B} der ursprüngliche Nennrundungsradius r verringert auf einen verkleinerten, abgeflachten Abstand c, der als Normalabstand vom Mittelpunkt der Nennquerschnittsgeometrie des Kettengliedbogens k_{B} bis zur Querschnittsabflachung A_{M} bestimmt werden kann.

Das erste Teilvolumen V_{M1} bzw. die erste Hälfte des abgeflachten Umformvolumens V_{A} wurde in Umfangsrichtung bzw. in Tangentialrichtung im Uhrzeigersinn von der Außenseite entlang des Umfangs des Kettengliedbogens an die Innenseite des Kettengliedbogens k_{B} verdrückt, wobei das zweite Teilvolumen V_{M2} in Umfangsrichtung bzw. in Tangentialrichtung in entgegen gesetzter Richtung, also gegen den Uhrzeigersinn, ebenfalls an die Innenseite des Kettengliedbogens k_{B} verdrückt wurde. Die beiden Teilvolumina V_{M1} und V_{M2} wurden dabei jeweils etwa um einen Viertelkreisbogen bis maximal einen Halbkreisbogen in Umfangsrichtung durch Verdrücken umgeformt.

Die Länge eines Kreisbogens kann dabei mit einem Mittelpunktswinkel α im Gradmaß und dem Kreisradius r berechnet werden. Der **Fig. 7B** ist zu entnehmen, dass das in der Abbildung weiter oben gelegene Teilvolumen V_{M1} hier beispielsweise um einen Mittelpunktswinkel α von zumindest 100° im Uhrzeigersinn von der Abflachung A_{M} aus gesehen durch Umformen in Umfangsrichtung verschoben wurde. Das in der Abbildung weiter unten gelegene Teilvolumen V_{M2} wurde hier beispielsweise um einen Mittelpunktswinkel α' von zumindest 100° gegen den Uhrzeigersinn von der Abflachung A_{M} aus gesehen durch Umformen in Umfangsrichtung verschoben. Damit ist gewährleistet, dass der modifizierte Querschnitt Q_{M} innerhalb der zwei Hüllebenen ε₁, ε₂ liegt.

Die beiden Teilvolumina V_{M1}, V_{M2} sind dabei zueinander spiegelsymmetrisch in Bezug zur Längsmittelebene ε_{M} des betreffenden Kettenglieds k₂ angeordnet, wobei die beiden Teilvolumina V_{M1}, V_{M2} so gleichmäßig entlang der Innenseite des Kettengliedbogens k_{B} aufgeteilt sind, dass ein vergrößerter modifizierter Rundungsradius r_{M} - und damit einhergehend - ein vergrößerter modifizierter Kettendurchmesser d_{M} aufgrund des zusätzlichen Verschleißvolumens V_{M} in diesen Abschnitten erhalten wird. Im Scheitelpunkt S, der an der Innenseite des Kettengliedbogens k_{B} im Schnittpunkt mit der Mittelebene ε_{M} des Kettenglieds k₂ in Längsrichtung, also in der X-Z-Ebene liegt, berühren einander der Hüllkreis des ursprünglichen, kreisförmigen Querschnitts Q mit einem Nennrundungsradius r, sowie der Hüllkreis des modifizierten Querschnitts Q_{M} mit einem vergrößerten modifizierten Rundungsradius r_{M}.

**Fig. 8** zeigt in einer Frontalansicht in Längsachsenrichtung einen Kettenpin 8 mit einer Gesamtlänge L_{G}, die der Längensumme von zwei modifizierten Längenabschnitten L_{M} mit jeweils modifiziertem Querschnitt Q_{M} sowie von zwei Längenabschnitten 1 ohne Querschnittsmodifikation entspricht. Der Kettenpin 8 ist im Bereich der halben Länge 1/2 des jeweils zweiten Längenabschnitts 1 ohne Querschnittsmodifikation bzw. mit kreisförmigem Nennquerschnitt Q abgelängt.

**Fig. 9** zeigt eine Schnittansicht des in **Fig. 8** gezeigten Kettenpins 8 gemäß der skizzierten Schnittebene C-C, die im Bereich eines modifizierten Längenabschnitts L_{M} mit einem modifizierten Querschnitt Q_{M} gewählt ist.

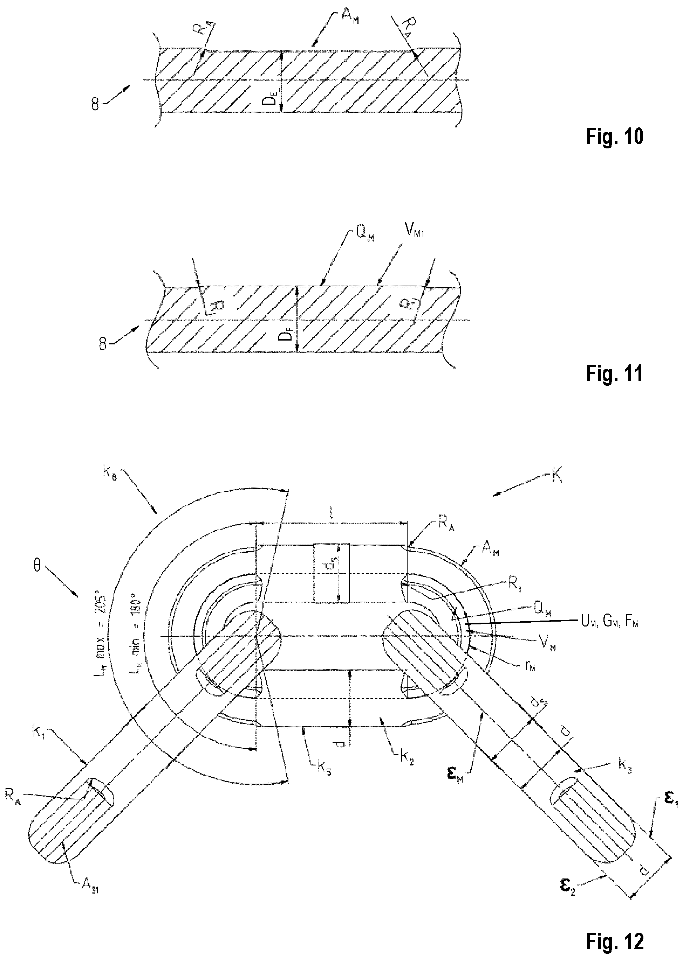

**Fig. 10** zeigt eine Schnittansicht des in **Fig. 8** gezeigten Kettenpins 8 gemäß der in **Fig. 9** skizzierten Schnittebene E-E. Hier ist an der Oberseite von **Fig. 10** eine Abflachung A_{M} entlang eines modifizierten Längenabschnitts L_{M} zu erkennen, in dem an der späteren Kreisbogenaußenseite ein Umformvolumen V_{A} abgetragen wurde. Die Übergänge der Abflachung A_{M} zu den jeweils daran angrenzenden Längenabschnitten 1 ohne Querschnittsmodifikation, also mit dem ursprünglichen kreisförmigen Nennquerschnitt Q, sind unter Bildung von außenseitigen Übergangsradien R_{A} gestaltet. Im Bereich der Abflachung A_{M} ergibt sich ein reduzierter Durchmesserabstand D_{E}, der etwa der in **Fig. 7B** gezeigten Längensumme von Nennrundungsradius r und verkleinertem, abgeflachtem Abstand c der Abflachung vom Mittelpunkt der Nennquerschnittsgeometrie, entspricht.

**Fig. 11** zeigt eine Schnittansicht des in **Fig. 8** gezeigten Kettenpins 8 gemäß der in **Fig. 9** skizzierten Schnittebene F-F, die so gewählt ist, dass sie durch eines der beiden Teilvolumina V_{M1} des umgeformten zusätzlichen Verschleißvolumens V_{M} durchgeht, das später am fertigen Kettenglied an dessen Kettenbogeninnenseite zu liegen kommen wird. Die Schnittebene F-F ist dazu gegenüber der Schnittebene E-E um einen Mittelpunktswinkel α von etwa 100° im Uhrzeigersinn gedreht. Hier an der Oberseite von **Fig. 11** ist ein vergrößerter Durchmesserabstand D_{F} des modifizierten Querschnitts Q_{M} infolge des zusätzlichen Verschleißvolumens V_{M1} zu sehen. Die Übergänge des Teilvolumens V_{M1} zu den jeweils daran angrenzenden Längenabschnitten 1 ohne Querschnittsmodifikation, also mit dem ursprünglichen kreisförmigen Nennquerschnitt Q, sind unter Bildung von innenseitigen Übergangsradien R_{I} gestaltet. Damit wird ein möglichst gleichmäßiger Übergang ohne Spannungsspitzen zwischen einem Abschnitt mit modifiziertem Querschnitt Q_{M} und den daran angrenzenden Abschnitten ohne Querschnittsmodifikation erzielt.

**Fig. 12** zeigt in einer Frontalansicht in Längsrichtung Kettenglieder k₁, k₂, k₃ einer erfindungsgemäßen Rundstahlkette K, die aus Walzdraht hergestellt sind. Wie eingangs bereits festgehalten können dünnere Walzdrähte so gebogen werden, dass diese beim Biegevorgang nicht knicken und damit eine Ovalisierung der Querschnittsflächen im Bereich der Kettengliedbögen vernachlässigbar ist. Hier in der Abbildung liegen die modifizierten Querschnitte Q_{M} der Kettenglieder k₁, k₂, k₃ jeweils innerhalb zweier Hüllebenen ε₁, ε₂, welche jeweils in Längsrichtung X an einen Kettengliedbogen k_{B} angrenzen und welche parallel zueinander sowie in einem Abstand des Nenndurchmessers d einander gegenüberliegend angeordnet sind. Anhand eines der Kettenglieder k₃ sind hier eine erste längsseitige Hüllebene ε₁ an den entsprechenden Kettengliedbogen k_{B}, eine zweite längsseitige Hüllebene ε₂ an denselben Kettengliedbogen k_{B} sowie eine Mittelebene ε_{M} des Kettenglieds k₃ in dessen Längsrichtung eingezeichnet. Ein Zentriwinkel θ, der anhand des Kettenglieds k₂ eingezeichnet ist, gibt die Länge des modifizierten Längenabschnitts L_{M} an anhand einer Kreisbogenlänge, die einem entsprechenden Zentriwinkel θ von 180° bis 205° entspricht. In **Fig. 12** sind die Längen der modifizierten Längenabschnitte L_{M} jeweils so gewählt, dass sich diese jeweils entlang eines Halbkreises mit einem Zentriwinkel θ von 180° und somit entlang des gesamten halbkreisförmigen Kettengliedbogens k_{B} erstrecken.

Die modifizierten Längenabschnitte L_{M} können sich gegebenenfalls auch noch jeweils entlang von an einen Kettengliedbogen k_{B} angrenzenden Abschnitten der Kettengliedschenkel k_{S} erstrecken - mit einer abgewickelten Kreisbogenlänge, die einem Zentriwinkel θ von bis zu 205° entspricht. Vorteilhaft sind also Übergangsabschnitte an den Längsrändern eines modifizierten Längenabschnitts L_{M} am Übergang zu den jeweils angrenzenden Längenabschnitten 1 ohne Querschnittsmodifikation so angeordnet, dass sie außerhalb des jeweiligen Gelenkbereichs zwischen benachbarten Kettengliedern, in dem der stärkste Verschleiß der Ketten auftritt, liegen.

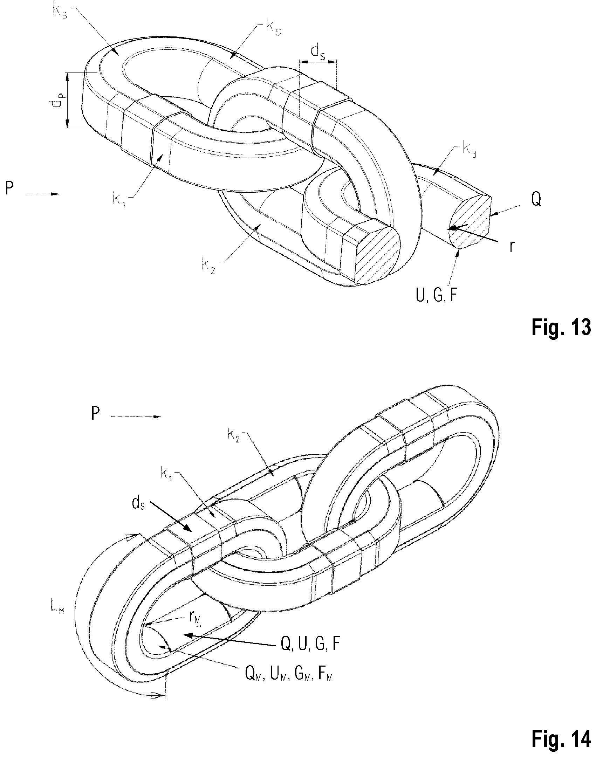

**Fig. 13** zeigt teilweise freigeschnittene Kettenglieder k₁, k₂, k₃ einer aus dem Stand der Technik bekannten Profilstahlkette P. Als Walzstahlmaterial zur Herstellung dieser Profilstahlkette P wurde ein Profilstahl etwa in D-Profilform verwendet.

**Fig. 14** zeigt in einer isometrischen Ansicht schräg von vorne Kettenglieder k₁, k₂, k₃ einer erfindungsgemäßen Profilstahlkette P. Jeder Kettengliedbogen k_{B} hat hier ausgehend von einem Nennquerschnitt Q der Kettengliedschenkel k_{S}, der einer D-Profilform entspricht, jeweils entlang eines modifizierten Längenabschnitts L_{M} einen im Vergleich zum Nennquerschnitt Q der Kettengliedschenkel k_{S} modifizierten Querschnitt Q_{M} mit einer modifizierten Querschnittsgeometrie G_{M} und einer modifizierten Querschnittsfläche F_{M}.

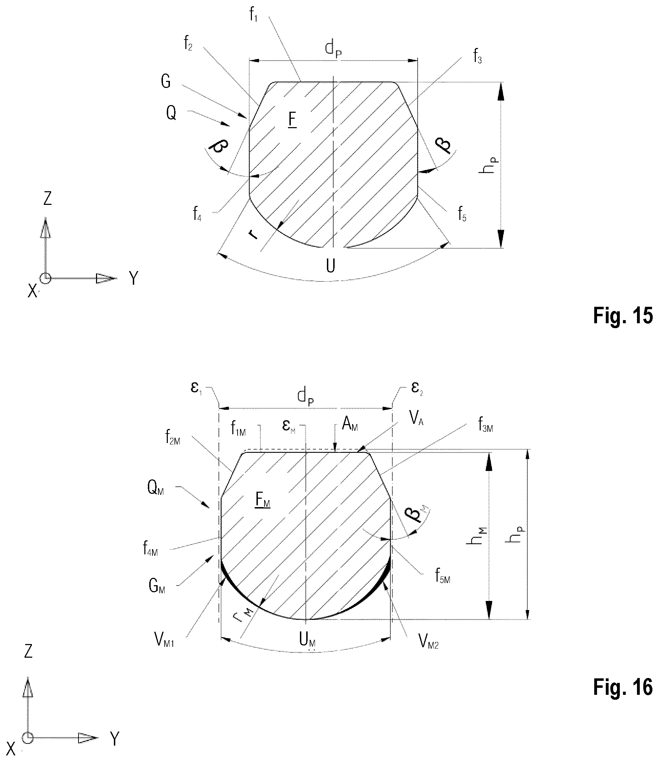

**Fig. 15** zeigt anhand einer Schnittansicht quer zu einem Kettengliedschenkel k_{S} des in **Fig. 13** gezeigten Kettenglieds k₃ einen Nennquerschnitt Q mit einer Nennquerschnittsfläche F und einer Nennquerschnittsgeometrie G dieser Profilstahlkette P. Die Nennquerschnittsgeometrie G bzw. Kontur des Nennquerschnitts wird durch einen gerundeten Umfangsabschnitt U mit einem Nennrundungsradius r gebildet, der sich gegenüberliegend zu einer abgeflachten ersten Flanke f₁ befindet. Beidseitig anschließend an diese erste Flanke f₁ sind eine zweite Flanke f₂ sowie eine der zweiten Flanke gegenüberliegende Flanke f₃ angeordnet, wobei die zweite und die dritte Flanke f₂, f₃ hier jeweils unter einem Winkel beispielsweise von etwa 60° in Bezug zur ersten Flanke f₁ angeordnet sind. Die Nennquerschnittsgeometrie G wird weiters durch zwei einander gegenüberliegende Flanken f₄, f₅ gebildet, welche hier jeweils senkrecht zur ersten Flanke f₁ sowie jeweils unter einem Phasenwinkel β in Bezug zur zweiten bzw. dritten Flanke f₂, f₃ geneigt sind. Der Phasenwinkel β beträgt hier etwa 30°. Der gerundete Umfangsabschnitt U wird durch die beiden Flanken f₄ und f₅ begrenzt.

Der Nennquerschnitt Q weist eine Nennquerschnittsbreite d_{P} auf, die hier dem Abstand zwischen den einander gegenüberliegenden abgeflachten Flanken f₄, f₅ entspricht. Weiters weist der Nennquerschnitt Q des hier gezeigten Profils eine Querschnittshöhe h_{P} auf, die vom Umfangsabschnitt U mit dem Nennrundungsradius r bis zur gegenüberliegenden abgeflachten Flanke f₁ reicht.

**Fig. 16** zeigt in einer Schnittansicht von vorne einen modifizierten Querschnitt Q_{M} mit einer modifizierten Querschnittsgeometrie G_{M} und einer modifizierten Querschnittsfläche F_{M} im Bereich eines modifizierten Längenabschnitts L_{M} eines Kettengliedes einer erfindungsgemäßen Profilstahlkette P gemäß **Fig. 14****.**

Im Vergleich des Ausgangsprofils mit dem Nennquerschnitt Q gemäß **Fig. 15** und dem modifizierten Profil mit dem modifizierten Querschnitt QM ist in **Fig. 16** gut zu erkennen, dass die erfindungsgemäße Querschnittmodifikation darin besteht, dass die modifizierte Querschnittsfläche F_{M} (der Flächeninhalt der in **Fig. 16** gezeigten Schnittfläche) und die ursprüngliche Nennquerschnittsfläche F (der Flächeninhalt der in **Fig. 15** gezeigten Schnittfläche) flächengleich sind und die modifizierte Querschnittsgeometrie G_{M} von der Nennquerschnittsgeometrie G abweicht, indem der modifizierte Querschnitt Q_{M} eine durch Umformen des Nennquerschnitts Q hergestellte Querschnittsabflachung A_{M} im Bereich der modifizierten Flanke f_{1M} an einer Außenseite des Kettengliedbogens k_{B} aufweist. Gleichzeitig weist der modifizierte Querschnitt Q_{M} eine an einer der Außenseite gegenüberliegenden Innenseite des Kettengliedbogens k_{B} angeordnete, mit umgeformtem Material verstärkte modifizierte Verschleißzone V_{M} auf, die hier auf zwei symmetrisch zur Mittelebene ε_{M} des Kettenglieds angeordnete Abschnitte V_{M1}, V_{M2} der modifizierten Verschleißzone V_{M} aufgeteilt sind. Die modifizierte Verschleißzone V_{M} ist in Form eines gerundeten modifizierten Umfangsabschnitts U_{M} mit einem im Vergleich zum Nennrundungsradius r vergrößerten modifizierten Rundungsradius r_{M} ausgebildet.

Die modifizierte Querschnittsgeometrie G_{M} der modifizierten Profilstahlkette wird hier - im Uhrzeigersinn - durch eine Abfolge der folgenden Konturabschnitte gebildet: modifizierte Flanken f_{1M}, f_{3M}, f_{5M}, gerundeter modifizierter Umfangsabschnitt U_{M}, modifizierte Flanken f_{4M}, f_{2M}. Die Phasenwinkel β zwischen der dritten und der fünften Flanke f₃, f₅ bzw. zwischen der zweiten und der vierten Flanke f₂, f₄ können als modifizierte Phasenwinkel β_{M} bei der modifizierten Querschnittsgeometrie G_{M} ebenfalls von den ursprünglichen Phasenwinkeln β abweichen.

Die Modifikation der umgeformten Querschnittsfläche ist hier so gewählt, dass eine modifizierte Querschnittsbreite der Nennquerschnittsbreite d_{P} entspricht, der Abstand zwischen den einander gegenüberliegenden abgeflachten Flanken f_{4M}, f_{5M} also beim modifizierten Querschnitt Q_{M} im Wesentlichen gleich bleibt. Eine modifizierte Querschnittshöhe h_{M} des modifizierten Querschnitts Q_{M} ist hier in Folge der Abflachung A_{M} etwas kleiner als die ursprüngliche Querschnittshöhe h_{P}.

Der modifizierte Querschnitt Q_{M} mit einer modifizierten Querschnittsgeometrie G_{M} und einer modifizierten Querschnittsfläche F_{M} liegt hier beispielsweise innerhalb zweier Hüllebenen ε₁, ε₂, die nicht Teil der Profilstahlkette P sind, die sich jeweils in X-Z-Ebenen-Richtung erstrecken und die hier jeweils in Längsrichtung X außenseitig an einen Kettengliedbogen k_{B} angrenzen. Die beiden Hüllebenen ε₁, ε₂ sind hier parallel zueinander sowie in einem Abstand der Nennquerschnittsbreite d_{P} einander gegenüberliegend angeordnet.

### LISTE DER BEZUGSZEICHEN

- 1: Walzstahlmaterial, Walzdraht, Walzstab; bzw. Rundstahlmaterial
- 2: Längsachse, Längsachsenrichtung (Pfeil)
- 3: Umformvorrichtung, Dressurrolle
- 4: Drehrichtung des Umformwerkzeugs (Pfeil)
- 5: Schneidvorrichtung
- 6: Bewegungsrichtung des Schneidwerkzeugs (Pfeil)
- 7: Schneidefläche, freies Ende des Kettenpins
- 8: Kettenpin
- 9: vorgebogenes Kettenglied
- 10: Druckrichtung (Pfeil)
- 11: Biegerichtung (Pfeil)
- 12: Biegevorrichtung, Biegedorn
- 13: Schweißvorrichtung
- 14: Pressrichtung (Pfeil)
- 15: Schweißstelle
- A_{M}: Querschnittsabflachung im modifizierten Längenabschnitt
- b_{I}: innere Kettengliedbreite
- b_{A}: äußere Kettengliedbreite
- c: Abstand der Abflachung vom Mittelpunkt der Nennquerschnittsgeometrie (Rundstahl)
- d: Nenndurchmesser
- d_{P}: Nenndurchmesser bzw. Nennquerschnittsbreite (Profilstahl)
- d_{M}: modifizierter Durchmesser
- d_{S}: Schweißstellendurchmesser bzw. Schweißstellendicke
- D_{E}: reduzierter Durchmesserabstand im Bereich der Abflachung (gemäß Schnitt E-E)
- D_{F}: vergrößerter Durchmesserabstand des modifizierten Querschnitts (gemäß Schnitt F-F)
- f₁: Flanke einer Profilstahlkette (bzw. f₂, f₃, f₄, f₅)
- f_{1M}: modifizierte Flanke der modifizierten Profilstahlkette (bzw. f_{2M}, f_{3M}, f_{4M}, f_{5M})
- F: Nennquerschnittsfläche, Flächeninhalt des Nennquerschnitts
- F_{M}: modifizierte Querschnittsfläche, Flächeninhalt des modifizierten Querschnitts
- G: Nennquerschnittsgeometrie, Kontur des Nennquerschnitts
- G_{M}: modifizierte Querschnittsgeometrie, Kontur des modifizierten Querschnitts
- h_{P}: Querschnittshöhe der Profilstahlkette
- h_{M}: modifizierte Querschnittshöhe der modifizierten Profilstahlkette
- k₁: Kettenglied (bzw. k₂, k₃)
- k_{B}: Kettengliedbogen
- k_{S}: Kettengliedschenkel
- K: Rundstahlkette
- l: Längenabschnitt ohne Querschnittsmodifikation bzw. mit kreisförmigem Querschnitt
- L_{M}: modifizierter Längenabschnitt
- L_{G}: Gesamtlänge des Kettenpins
- P: Profilstahlkette
- Q: (ursprünglicher) Nennquerschnitt
- Q_{M}: modifizierter Querschnitt
- r: (ursprünglicher) Nennrundungsradius
- r_{M}: (vergrößerter) modifizierter Rundungsradius
- R_{I}: Übergangsradius an der Kettengliedinnenseite
- R_{A}: Übergangsradius an der Kettengliedaußenseite
- S: Scheitelpunkt
- t: Kettenteilung
- U: (ursprünglicher) gerundeter Umfangsabschnitt, gerundete Umfangsfläche
- U_{M}: gerundete modifizierte Umfangsfläche
- V_{A}: abgeflachtes Volumen, Umformvolumen
- V_{M}: modifizierte Verschleißzone; zusätzliches modifiziertes Verschleißvolumen
- V_{M1}: erster Abschnitt der modifizierten Verschleißzone bzw. des Verschleißvolumens
- V_{M2}: zweiter Abschnitt der modifizierten Verschleißzone bzw. des Verschleißvolumens
- X: Längsrichtung des Kettenglieds
- Y: Querrichtung des Kettenglieds
- Z: Hochrichtung des Kettenglieds
- α: Mittelpunktswinkel (bzw. α')
- β: Phasenwinkel
- β_{M}: modifizierter Phasenwinkel
- ε₁: erste längsseitige Hüllebene an den Kettengliedbogen (parallel zur X-Z-Ebene)
- ε₂: zweite längsseitige Hüllebene an den Kettengliedbogen (parallel zur X-Z-Ebene)
- ε_{M}: Mittelebene in Längs-/Hochrichtung des Kettenglieds (X-Z-Ebene)
- θ: Zentriwinkel

## Patentansprüche

1. Stahlkette, umfassend gelenkig miteinander verbundene Kettenglieder (k₁, k₂, k₃), wobei bei jedem Kettenglied (k₁, k₂, k₃) jeweils zwei einander gegenüberliegende Kettengliedbögen (k_{B}) über zwei im Wesentlichen gerade Kettengliedschenkel (k_{S}) miteinander zu einer Ringform verbunden sind, wobei eine der jeweils zwei Kettengliedschenkel (k_{S}) eine Schweißstelle (d_{S}) aufweist, und wobei jeder Kettengliedschenkel (k_{S}) der Stahlkette zumindest außerhalb des Bereiches der Schweißstelle (ds) einen konstanten Nennquerschnitt (Q) mit gleichbleibender Nennquerschnittsgeometrie (G) und gleichbleibender Nennquerschnittsfläche (F) aufweist, und wobei die Nennquerschnittsgeometrie (G) zumindest an einer Innenseite des Kettengliedschenkels (k_{S}) einen gerundeten Umfangsabschnitt (U) mit einem Nennrundungsradius (r) aufweist,
wobei jeder Kettengliedbogen (k_{B}) ausgehend von dem Nennquerschnitt (Q) der Kettengliedschenkel (k_{S}) jeweils entlang eines modifizierten Längenabschnitts (L_{M}) einen im Vergleich zum Nennquerschnitt (Q) der Kettengliedschenkel (k_{S}) modifizierten Querschnitt (Q_{M}) mit einer modifizierten Querschnittsgeometrie (G_{M}) und einer modifizierten Querschnittsfläche (F_{M}) aufweist, wobei die Querschnittmodifikation darin besteht, **dadurch gekennzeichnet, dass** die modifizierte Querschnittsfläche (F_{M}) und die Nennquerschnittsfläche (F) flächengleich sind und die modifizierte Querschnittsgeometrie (G_{M}) von der Nennquerschnittsgeometrie (G) abweicht, indem der modifizierte Querschnitt (Q_{M}) eine durch Umformen des Nennquerschnitts (Q) hergestellte Querschnittsabflachung (A_{M}) an einer Außenseite des Kettengliedbogens (k_{B}) und gleichzeitig eine an einer der Außenseite gegenüberliegenden Innenseite des Kettengliedbogens (k_{B}) angeordnete, mit umgeformtem Material verstärkte modifizierte Verschleißzone (V_{M}) aufweist, wobei die modifizierte Verschleißzone (V_{M}) in Form eines gerundeten modifizierten Umfangsabschnitts (U_{M}) mit einem im Vergleich zum Nennrundungsradius (r) vergrößerten modifizierten Rundungsradius (r_{M}) ausgebildet ist.

2. Stahlkette nach Anspruch 1, **dadurch gekennzeichnet, dass** bei einem Kettenglied (k₁, k₂, k₃) entlang des modifizierten Längenabschnittes (L_{M}) mit einer modifizierten Querschnittsgeometrie (G_{M}) das Ausmaß einer lokalen Querschnittsflächenvergrößerung infolge der innenseitig angeordneten modifizierten Verschleißzone (V_{M}) mit dem Ausmaß einer lokalen Querschnittsflächenverringerung infolge der außenseitigen Querschnittsabflachung (A_{M}) korreliert, insbesondere gleiche Flächenbeträge aufweist.

3. Stahlkette nach Anspruch 1 oder 2, **dadurch gekennzeichnet, dass** bei einem Kettenglied (k₁, k₂, k₃) ein modifiziertes Verschleißvolumen, welches durch die Erstreckung der modifizierten Verschleißzone (V_{M}) innenseitig entlang des modifizierten Längenabschnitts (L_{M}) ausgebildet ist, einem fehlenden abgeflachten Umformvolumen (V_{A}) im Bereich der außenseitigen Querschnittsabflachung (A_{M}) desselben modifizierten Längenabschnitts (L_{M}) entspricht.

4. Stahlkette nach einem der Ansprüche 1 bis 3, **dadurch gekennzeichnet, dass** der modifizierte Rundungsradius (r_{M}) entlang des modifizierten Längenabschnitts (L_{M}) kleiner als der 1,1-fache Wert des Nennrundungsradius (r), vorzugsweise vom 1,02-fachen bis 1,09-fachen Wert des Nennrundungsradius (r), ist.

5. Stahlkette nach einem der Ansprüche 1 bis 4, **dadurch gekennzeichnet, dass** die umgeformte modifizierte Verschleißzone (V_{M}) auf zwei Verschleißzonenabschnitte (V_{M1}, V_{M2}) aufgeteilt ist, wobei die zwei Verschleißzonenabschnitte (V_{M1}, V_{M2}) jeweils an der Innenseite des Kettengliedbogens (k_{B}) sowie zueinander spiegelsymmetrisch in Bezug zur Mittelebene (ε_{M}), welche sich jeweils in Längsrichtung (X) sowie in Hochrichtung (Z) eines Kettenglieds (k₁, k₂, k₃) erstreckt und im Wesentlichen senkrecht zur außenseitigen Querschnittsabflachung (A_{M}) des Kettenglieds (k₁, k₂, k₃) steht, angeordnet sind.

6. Stahlkette nach einem der Ansprüche 1 bis 5, **dadurch gekennzeichnet, dass** sich ein modifizierter Längenabschnitt (L_{M}) mit einem modifizierten Querschnitt (Q_{M}) zumindest entlang eines ganzen Kettengliedbogens (k_{B}) erstreckt und sich gegebenenfalls zusätzlich entlang von an den Kettengliedbogen (k_{B}) angrenzenden Abschnitten der Kettengliedschenkel (k_{S}) erstreckt, wobei die Länge des modifizierten Längenabschnitts (L_{M}) einer Kreisbogenlänge mit einem Zentriwinkel (θ) von 180° bis 205° entspricht.

7. Stahlkette nach einem der Ansprüche 1 bis 6, **dadurch gekennzeichnet, dass** eine Querschnittsabflachung (A_{M}), die entlang eines modifizierten Längenabschnitts (L_{M}) an der Außenseite des Kettengliedbogens (k_{B}) angeordnet ist, jeweils unter Bildung eines außenseitigen Übergangsradius (R_{A}) in einen angrenzenden Längenabschnitt (1) mit konstantem Nennquerschnitt (Q) übergeht, wobei der außenseitige Übergangsradius (R_{A}) an den Längsenden einer Querschnittsabflachung (A_{M}) vorzugsweise zwischen dem 0,2- fachen und dem 0,3-fachen Wert des Nenndurchmessers (d) beträgt, und besonders bevorzugt der 0,27-fache Wert des Nenndurchmessers (d) ist.

8. Stahlkette nach einem der Ansprüche 1 bis 7, **dadurch gekennzeichnet, dass** ein Abschnitt mit einer modifizierten Verschleißzone (V_{M}), der entlang eines modifizierten Längenabschnitts (L_{M}) an der Innenseite des Kettengliedbogens (k_{B}) angeordnet ist, jeweils unter Bildung eines innenseitigen Übergangsradius (R_{I}) in einen angrenzenden Längenabschnitt (1) mit konstantem Nennquerschnitt (Q) übergeht, wobei der innenseitige Übergangsradius (R_{I}) an den Längsenden des modifizierten Längenabschnitts (L_{M}) vorzugsweise zwischen dem 0,2- fachen und dem 0,3-fachen Wert des Nenndurchmessers (d) beträgt, und besonders bevorzugt der 0,27-fache Wert des Nenndurchmessers (d) ist.

9. Stahlkette nach einem der Ansprüche 1 bis 8, **dadurch gekennzeichnet, dass** jedes der Kettenglieder (k₁, k₂, k₃) im Wesentlichen gleich geformt ist.

10. Stahlkette nach einem der Ansprüche 1 bis 9, **dadurch gekennzeichnet, dass** der modifizierte Querschnitt (Q_{M}) eines Kettenglieds (k₁, k₂, k₃) jeweils ausschließlich innerhalb zweier zueinander paralleler Hüllebenen (ε₁, ε₂) liegt, welche außenseitig dieses Kettenglieds (k₁, k₂, k₃) angeordnet sind und sich jeweils in Längsrichtung (X) sowie in Hochrichtung (Z) dieses Kettengliedes (k₁, k₂, k₃) erstrecken, wobei die beiden Hüllebenen (ε₁, ε₂) höchstens in einem Abstand eines Schweißstellendurchmessers oder einer Schweißstellendicke im Bereich der Schweißstelle (d_{S}) voneinander beabstandet sind.

11. Stahlkette nach einem der Ansprüche 1 bis 10, **dadurch gekennzeichnet, dass** der modifizierte Querschnitt (Q_{M}) eines Kettenglieds (k₁, k₂, k₃) ausschließlich innerhalb zweier Hüllebenen (ε₁, ε₂) liegt, welche außenseitig eines Kettengliedbogens (k_{B}) dieses Kettenglieds (k₁, k₂, k₃) angeordnet sind und sich jeweils in Längsrichtung (X) sowie in Hochrichtung (Z) dieses Kettengliedes (k₁, k₂, k₃) erstrecken, wobei
- die beiden Hüllebenen (ε₁, ε₂) bei einem Kettenglied (k₁, k₂, k₃), das aus Rundstahl gefertigt ist, höchstens in einem Abstand eines Nenndurchmessers (d) der Nennquerschnittsgeometrie (G) des im Wesentlichen kreisförmigen Ausgangsmaterials voneinander beabstandet sind, oder
- die beiden Hüllebenen (ε₁, ε₂) bei einem Kettenglied (k₁, k₂, k₃), das aus Profilstahl gefertigt ist, höchstens in einem Abstand einer Nennquerschnittsbreite (d_{P}) zwischen zwei in Querrichtung (Y) einander gegenüberliegenden Profilflanken (f₄, f₅, f_{4M}, f_{5M}) der Nennquerschnittsgeometrie (G) des profilierten Ausgangsmaterials voneinander beabstandet sind.

12. Stahlkette nach einem der Ansprüche 1 bis 11, **dadurch gekennzeichnet, dass** ein Kettenglied (k₁, k₂, k₃) mit modifizierten Querschnitten (Q_{M}) entlang von modifizierten Längenabschnitten (L_{M}) dieselbe innere Kettengliedbreite (b_{I}), äußere Kettengliedbreite (b_{A}) sowie Kettenteilung (t) aufweist wie ein herkömmliches Kettenglied einer Stahlkette mit konstantem Nennquerschnitt (Q) sowie ohne Querschnittsmodifikation.

13. Verfahren zur Herstellung einer Stahlkette, umfassend eine Abfolge der folgenden Schritte:
a) Bereitstellen von Walzstahlmaterial (1), insbesondere von Walzdrähten oder Walzstäben, in Form von Rundstahlmaterial mit einem im Wesentlichen kreisförmigen Nennquerschnitt (Q) sowie einem Nenndurchmesser (d), oder in Form von Profilstahlmaterial mit einem profilierten Nennquerschnitt (Q);
b) kontinuierliches Zuführen des bereitgestellten Walzstahlmaterials (1) in Längsachsenrichtung (2) in eine Umformvorrichtung (3);
c) Abschnittsweises Umformen des Walzstahlmaterials (1) jeweils entlang von modifizierten Längenabschnitten (L_{M}), die alternierend mit zwischenliegenden Längenabschnitten (1) ohne Querschnittsmodifikation in Längsrichtung (2) des Rundstahlmaterials (1) angeordnet werden, wobei dem Walzstahlmaterial (1) jeweils entlang eines modifizierten Längenabschnittes (L_{M}) durch Verformen ein modifizierter Querschnitt (Q_{M}) aufgeprägt wird, indem entlang einer Längsseite des modifizierten Längenabschnitts (L_{M}) durch Verdrücken eine Querschnittsabflachung (A_{M}) hergestellt wird und das dabei abgeflachte Umformvolumen (V_{A}) als zusätzliches Verschleißvolumen (V_{M}) solcherart an der der Querschnittsabflachung (A_{M}) gegenüberliegenden Längsseite desselben modifizierten Längenabschnitts (L_{M}) angeordnet wird, dass zumindest in einem Abschnitt mit einer gerundeten Umfangsfläche (U) ein Nennrundungsradius (r) vergrößert und zumindest ein Abschnitt mit einer modifizierten gerundeten Umfangsfläche (U_{M}) mit einem im Vergleich zum Nennrundungsradius (r) vergrößerten modifizierten Rundungsradius (r_{M}) erhalten wird;
d) Ablängen des abschnittsweise umgeformten Walzstahlmaterials zu Kettenpins (8) mit einer Gesamtlänge (L_{G}), die der Längensumme von zwei modifizierten Längenabschnitten (L_{M}) sowie von zwei Längenabschnitten (1) ohne Querschnittsmodifikation entspricht, wobei jeder Kettenpin (8) im Bereich der halben Länge (1/2) des jeweils zweiten Längenabschnitts (1) ohne Querschnittsmodifikation abgelängt (7) wird;
e) Biegen jedes Kettenpins (8) mittels einer Biegevorrichtung (12) zu einem vorgebogenen Kettenglied (9), wobei die zwei modifizierten Längenabschnitte (L_{M}) mit modifiziertem Querschnitt (Q_{M}) jeweils so angeordnet werden, dass diese im Bereich der Kettengliedbögen (k_{B}) liegen, und die zwischenliegenden Längenabschnitte (1) ohne Querschnittsmodifikation im Bereich der Kettengliedschenkel (k_{S}) liegen, wobei die Querschnittsabflachungen (A_{M}) an den Außenseiten der Kettengliedbögen (k_{B}) angeordnet werden sowie ein im Vergleich zum Nennrundungsradius (r) vergrößerter modifizierter Rundungsradius (r_{M}) im Bereich der Kettengliedinnenrundung an der Innenseite des Kettengliedbogens (k_{B}) angeordnet wird;
f) Ineinanderfügen mehrerer vorgebogener Kettenglieder (9) zu einer vorgebogenen Kette;
g) Verschweißen der freien Enden (7) jedes vorgebogenen Kettenglieds (9) zu einem fertigen Kettenglied (k₁, k₂, k₃) in Ringform, wobei einer der Kettengliedschenkel (k_{S}) eine Schweißstelle mit einem Schweißstellendurchmesser (d_{S}) oder einer Schweißstellendicke (d_{S}) aufweist.

14. Verfahren nach Anspruch 13, **dadurch gekennzeichnet, dass** in Schritt c) das Walzstahlmaterial (1) abschnittsweise durch Kaltfließ-, Halbwarm- oder Warmpressen oder durch Warmrollen umgeformt wird.

15. Verfahren nach einem der Ansprüche 13 oder 14, **dadurch gekennzeichnet, dass** in Schritt c) das Walzstahlmaterial (1) abschnittsweise so umgeformt wird, dass der modifizierte Rundungsradius (r_{M}) entlang des modifizierten Längenabschnitts (L_{M}) kleiner als der 1,1-fache Wert des Nennrundungsradius (r), vorzugsweise vom 1,02-fachen bis 1,09-fachen Wert des Nennrundungsradius (r), eingestellt wird.

## Claims

1. Steel chain comprising chain links (k₁, k₂, k₃) articulately connected to each other, wherein
in each chain link (k₁, k₂, k₃) two opposite chain link arcs (k_{B}) are joined by two substantially straight chain link legs (k_{S}), thus forming a ring shape, one of the two chain link legs (k_{S}) comprising a weld location (d_{S}), and each chain link leg (k_{S}) of the steel chain having a constant nominal cross-section (Q) with a uniform nominal cross-section geometry (G) and uniform nominal cross-section area (F) at least outside the area of the weld location (d_{S}), and wherein the nominal cross-sectional geometry (G) has a rounded peripheral portion (U) having a nominal rounding radius (r) on at least one inner side of the chain link leg (k_{S}),
wherein each chain link arc (k_{B}) has, with respect to the nominal cross-section (Q) of the chain link legs (k_{S}), a modified cross-section (Q_{M}) along a respective modified length portion (L_{M}) having, as compared to the nominal cross-section (Q) of the chain link legs (k_{S}), a modified cross-sectional geometry (G_{M}) and a modified cross-sectional area (F_{M}), wherein the cross-section modification consists in
**characterized in that**
the modified cross-sectional area (F_{M}) and the nominal cross-sectional area (F) have equal areas, and the modified cross-sectional geometry (G_{M}) differs from the nominal cross-sectional geometry (G) **in that** the modified cross-section (Q_{M}) includes a cross-sectional flattening (A_{M}) generated by reshaping the nominal cross-section (Q) on an outer side of the chain link arc (k_{B}) and, at the same time, a modified wear zone (V_{M}) reinforced with reshaped material and arranged on an inner side of the chain link arc (k_{B}) opposite the outer side, wherein the modified wear zone (V_{M}) is formed in the shape of a rounded modified circumferential portion (U_{M}) having a modified rounding radius (r_{M}) that is larger than the nominal rounding radius (r).

2. Steel chain according to claim 1, **characterized in that**, in a chain link (k₁, k₂, k₃) along the modified length portion (L_{M}) having a modified cross-sectional geometry (G_{M}), the extent of a local increase of cross-sectional area due to the modified wear zone (V_{M}) arranged on the inside correlates with the extent of a local reduction of cross-sectional area due to the external cross-sectional flattening (A_{M}), in particular has equal area values.

3. Steel chain according to claim 1 or 2, **characterized in that** in a chain link (k₁, k₂, k₃) a modified wear volume, formed by the extension of the modified wear zone (V_{M}) on the inside along the modified length portion (L_{M}), corresponds to a missing flattened deformation volume (V_{A}) in the area of the outer cross-sectional flattening (A_{M}) of the same modified length portion (L_{M}).

4. Steel chain according to any one of claims 1 to 3, **characterized in that** the modified rounding radius (r_{M}) along the modified length portion (L_{M}) is less than 1.1 times the value of the nominal rounding radius (r), preferably between 1.02 times to 1.09 times the value of the nominal rounding radius (r).

5. Steel chain according to any one of claims 1 to 4, **characterized in that** the reshaped modified wear zone (V_{M}) is divided into two wear zone portions (V_{M1}, V_{M2}), wherein the two wear zone portions (V_{M1}, V_{M2}) are respectively located on the inside of the chain link arc (k_{B}) and being mirror-symmetrical to each other with respect to the center plane (ε_{M}) extending in the longitudinal direction (X) and the vertical direction (Z) of a chain link (k₁, k₂, k₃) and being essentially perpendicular to the outer cross-sectional flattening (A_{M}) of the chain link (k₁, k₂, k₃).

6. Steel chain according to any one of claims 1 to 5, **characterized in that** a modified length portion (L_{M}) with a modified cross-section (Q_{M}) extends at least along an entire chain link arc (k_{B}) and optionally additionally along portions of the chain link legs (k_{S}) adjacent to the chain link arc (k_{B}), wherein the length of the modified length portion (L_{M}) corresponds to a circular arc length at a central angle (θ) of 180° to 205°.

7. Steel chain according to any one of claims 1 to 6, **characterized in that** a cross-sectional flattening (A_{M}) arranged along a modified length portion (L_{M}) on the outside of the chain link arc (k_{B}) transitions into an adjacent length portion (l) having constant nominal cross-section, respectively realizing an outer transition radius (R_{A}), wherein the outer transition radius (R_{A}) at the longitudinal ends of a cross-sectional flattening (A_{M}) is preferably between 0.2 times and 0.3 times the nominal diameter (d), and more preferably 0.27 times the nominal diameter (d).

8. Steel chain according to any one of claims 1 to 7, **characterized in that** a portion including a modified wear zone (V_{M}), which is arranged along a modified length portion (L_{M}) on the inside of the chain link arc (k_{B}), transitions into an adjacent length portion (l) having constant nominal cross-section, respectively realizing an inner transition radius (R_{I}), wherein the inner transition radius (R_{I}) at the longitudinal ends of the modified length portion (L_{M}) is preferably between 0.2 times and 0.3 times the nominal diameter (d). and more preferably 0.27 times the nominal diameter (d).

9. Steel chain according to any one of claims 1 to 8, **characterized in that** each of the chain links (k₁, k₂, k₃) has substantially the same shape.

10. Steel chain according to any one of claims 1 to 9, **characterized in that** the modified cross-section (Q_{M}) of a chain link (k₁, k₂, k₃) is exclusively within two parallel envelope planes (ε₁, ε₂) arranged outside of the respective chain link (k₁, k₂, k₃) and extending in the longitudinal direction (X) and the vertical direction (Z) of the respective chain link (k₁, k₂, k₃), the two envelope planes (ε₁, ε₂) having a mutual distance of at most a weld diameter or a weld thickness in the region of the weld (d_{S}).

11. Steel chain according to any one of claims 1 to 10, **characterized in that** the modified cross-section (Q_{M}) of a chain link (k₁, k₂, k₃) is exclusively within two envelope planes (ε₁, ε2) arranged outside of a chain link arc (k_{B}) of the respective chain link (k₁, k₂, k₃) and extending in the longitudinal direction (X) and the vertical direction (Z) of this chain link (k₁, k₂, k₃), wherein
- the two envelope planes (ε₁, ε₂) in a chain link (k₁, k₂, k₃) made of round steel have a mutual distance of at most one nominal diameter (d) of the nominal cross-sectional geometry (G) of the substantially circular starting material, or
- the two envelope planes (ε₁, ε₂) in a chain link (k₁, k₂, k₃) made of sectional steel have a mutual distance of at most a nominal cross-sectional width (d_{P}) between two opposite profile flanks (f₄, f₅, f_{4M}, f_{5M}) of the nominal cross-sectional geometry (G) of the profiled starting material.

12. Steel chain according to any one of claims 1 to 11, **characterized in that** a chain link (k₁, k₂, k₃) having modified cross-sections (Q_{M}) along modified length portions (L_{M}) has the same inner chain link width (b_{I}), outer chain link width (b_{A}), and chain pitch (t) as a conventional chain link of a steel chain having constant nominal cross-section (Q) and without cross-section modification.

13. Method for manufacturing a steel chain, comprising a sequence of the following steps:
a) providing rolled steel material (1), such as rolled wire or rolled bars, in the form of round steel material having a substantially circular nominal cross-section (Q) and a nominal diameter (d), or in the form of profiled steel material having a profiled nominal cross-section (Q);
b) feeding the provided rolled steel material (1) continuously into a forming device (3) along the longitudinal axis direction (2);
c) re-forming, portion by portion, the rolled steel material (1) along respective modified length portions (L_{M}) which are arranged alternately with intermediate length portions (l) without cross-section modification in the longitudinal direction (2) of the round steel material (1), wherein the rolled steel material (1) is given a modified cross-section (Q_{M}) by deformation along a modified length portion (L_{M}) by generating a cross-section flattening (A_{M}) along a longitudinal side of the modified longitudinal portion (L_{M}) by impression and arranging the deformation volume (V_{A}) thus flattened as an additional wear volume (V_{M}) on the longitudinal side opposite to said cross-section flattening (A_{M}) of the same modified longitudinal portion (L_{M}) in such a way that, in at least one portion having a rounded peripheral surface (U), a nominal rounding radius (r) is increased and at least one portion with a modified rounded peripheral surface (U_{M}) is obtained with a modified rounding radius (r_{M}) that is increased as compaired to the nominal rounding radius (r);
d) cutting the rolled steel material re-formed portion by portion to length to form chain pins (8) having a total length (L_{G}) corresponding to the sum of the lengths of two modified length portions (L_{M}) and two length portions (l) without cross-section modification, each chain pin (8) being cut to length (7) in the region of half the length (1/2) of every other length portion (1) without cross-section modification;
e) bending each chain pin (8) using a bending apparatus (12) to form a pre-bent chain link (9), arranging the two modified length portions (L_{M}) having modified cross-sections (Q_{M}) such that they respectively lie within the region of the chain link bends (k_{B}) and the intermediate length portions (l) without cross-section modification lie within the region of the chain link legs (k_{S}), wherein the cross-section flattenings (A_{M}) are arranged on the outer sides of the chain link bends (k_{B}) and a modified rounding radius (r_{M}) that is larger than the nominal rounding radius (r) is arranged in the region of the chain link inner rounding on the inner side of the chain link bend (k_{B});
f) interlocking of a number of pre-bent chain links (9) to form a pre-bent chain;
g) welding the free ends (7) of each pre-bent chain link (9) to form a finished chain link (k₁, k₂, k₃) having a ring form, wherein one of the chain link legs (k_{S}) has a welded joint with a welded joint diameter (d_{S}) or a welded joint thickness (d_{S}).

14. Method according to claim 13, **characterized in that** in step c) the rolled steel material (1) is re-formed portion by portion by cold extrusion, semi-hot, or hot pressing, or by hot rolling.

15. Method according to claim 13 or 14, **characterized in that** in step c) the rolled steel material (1) is re-formed portion by portion such that the modified rounding radius (r_{M}) along the modified length portion (L_{M}) is less than 1.1 times the value of the nominal rounding radius (r), preferably from 1.02 times to 1.09 times the value of the nominal rounding radius (r).

## Revendications

1. Chaîne en acier comprenant des maillons (k₁, k₂, k₃) reliés entre eux de manière articulée, dans laquelle, pour chaque maillon (k₁, k₂, k₃), deux arcs de maillon (k_{B}) opposés l'un à l'autre sont reliés entre eux par deux branches de maillon (k_{S}) essentiellement droites pour former un anneau, l'une des deux branches de maillon (k_{S}) présentant un point de soudure (d_{S}), et chaque branche de maillon (k_{S}) de la chaîne en acier présentant, au moins hors de la zone du point de soudure (d_{S}), une section transversale nominale constante (Q) avec une géométrie de section transversale nominale constante (G) et une surface de section transversale nominale constante (F), et la géométrie de section nominale (G) présentant, au moins sur un côté intérieur du brin de maillon de chaîne (k_{S}), une partie périphérique arrondie (U) avec un rayon d'arrondi nominal (r),
chaque arc de maillon de chaîne (k_{B}) présentant, à partir de la section nominale (Q) des brins de maillon de chaîne (k_{S}) le long d'une section longitudinale modifiée (L_{M}), une section transversale modifiée (Q_{M}) par rapport à la section transversale nominale (Q) des branches de maillon de chaîne (k_{S}), avec une géométrie de section transversale modifiée (G_{M}) et une surface de section transversale modifiée (F_{M}), la modification de la section transversale consistant en
**caractérisé en ce que**
la surface de section transversale modifiée (F_{M}) et la surface de section transversale nominale (F) sont de même surface et la géométrie de section transversale modifiée (G_{M}) diffère de la géométrie de section transversale nominale (G) **en ce que** la section transversale modifiée (Q_{M}) présente un aplatissement de section transversale (A_{M}) produit par déformation de la section transversale nominale (Q) sur un côté extérieur de l'arc de maillon de chaîne (k_{B}) et, en même temps, une zone d'usure modifiée (V_{M})renforcée par du matériau déformé disposée sur un côté intérieur de l'arc de maillon de chaîne (k_{B}) opposé au côté extérieur, la zone d'usure modifiée (V_{M}) étant réalisée sous la forme d'une section périphérique modifiée arrondie (U_{M}) avec un rayon d'arrondi modifié (r_{M}) agrandi par rapport au rayon d'arrondi nominal (r).

2. Chaîne en acier selon la revendication 1, **caractérisée en ce que**, dans le cas d'un maillon de chaîne (k₁, k₂, k₃) le long de la section longitudinale modifiée (L_{M}) avec une géométrie de section transversale modifiée (G_{M}), l'ampleur d'un agrandissement local de la surface de section transversale résultant de la zone d'usure modifiée disposée à l'intérieur (V_{M}) est corrélée à l'ampleur d'une réduction locale de la surface de la section transversale due à l'aplatissement de la section transversale (A_{M}) disposé à l'extérieur, et en particulier présente des surfaces identiques.

3. Chaîne en acier selon la revendication 1 ou 2, **caractérisée en ce que**, pour un maillon de chaîne (k₁, k₂, k₃), un volume d'usure modifié qui est formé par l'extension de la zone d'usure modifiée (V_{M}) est formé à l'intérieur le long de la section longitudinale modifiée (L_{M}) correspond à un volume de déformation aplati manquant (V_{A}) dans la zone de l'aplatissement de section transversale extérieur (A_{M}) de la même section longitudinale modifiée (L_{M}).

4. Chaîne en acier selon l'une quelconque des revendications 1 à 3, **caractérisée en ce que** le rayon d'arrondi modifié (r_{M}) le long de la section longitudinale modifiée (L_{M}) est inférieur à 1,1 fois la valeur du rayon d'arrondi nominal (r), de préférence compris entre 1,02 et 1,09 fois la valeur du rayon d'arrondi nominal (r).

5. Chaîne en acier selon l'une quelconque des revendications 1 à 4, **caractérisée en ce que** la zone d'usure modifiée transformée (V_{M}) est divisée en deux sections de zone d'usure (V_{M1}, V_{M2}), lesdites deux sections de zone d'usure (V_{M1}, V_{M2}) étant disposées respectivement sur la face intérieure de l'arc de maillon de chaîne (k_{B}) et de manière symétrique l'une par rapport à l'autre par rapport au plan médian (ε_{M}), qui s'étend respectivement dans la direction longitudinale (X) et dans la direction verticale (Z) d'un maillon de chaîne (k₁, k₂, k₃) et est essentiellement perpendiculaire à l'aplatissement transversal extérieur (A_{M}) du maillon de chaîne (k₁, k₂, k₃).

6. Chaîne en acier selon l'une quelconque des revendications 1 à 5, **caractérisée en ce qu'**une section longitudinale modifiée (L_{M}) ayant une section transversale modifiée (Q_{M}) s'étend au moins le long d'un arc de maillon de chaîne entier (k_{B}) et, le cas échéant, s'étend en outre le long des sections adjacentes aux arcs de maillon de chaîne (k_{S}), la longueur de la section longitudinale modifiée (L_{M}) correspondant à une longueur d'arc de cercle avec un angle au centre (θ) de 180° à 205°.

7. Chaîne en acier selon l'une quelconque des revendications 1 à 6, **caractérisée en ce qu'**un aplatissement de section transversale (A_{M}), qui est disposé le long d'une section longitudinale modifiée (L_{M}) sur le côté extérieur de l'arc de maillon de chaîne (k_{S}), se poursuit en une section longitudinale adjacente (l) de section transversale nominale constante (Q) en formant un rayon de transition extérieur (R_{A}), ledit rayon de transition extérieur (R_{A}) étant de préférence compris, aux extrémités longitudinales d'un aplatissement de section transversale (A_{M}), entre 0,2 et 0,3 fois la valeur du diamètre nominal (d) et étant de préférence 0,27 fois la valeur du diamètre nominal (d).

8. Chaîne en acier selon l'une quelconque des revendications 1 à 7, **caractérisée en ce qu'**une section ayant une zone d'usure modifiée (V_{M}), qui est disposée le long d'une section longitudinale modifiée (L_{M}) sur la face intérieure de l'arc de maillon de chaîne (k_{B}), se poursuit en une section longitudinale adjacente (l) de section transversale nominale constante (Q) en formant un rayon de transition intérieur (R_{I}), ledit rayon de transition intérieur (R_{I}) étant de préférence compris, aux extrémités longitudinales de la section longitudinale modifiée (L_{M}), entre 0,2 et 0,3 fois la valeur du diamètre nominal (d) et étant de préférence 0,27 fois la valeur du diamètre nominal (d).

9. Chaîne en acier selon l'une quelconque des revendications 1 à 8, **caractérisée en ce que** chacun des maillons (k₁, k₂, k₃) a essentiellement la même forme.

10. Chaîne en acier selon l'une quelconque des revendications 1 à 9, **caractérisée en ce que** la section transversale modifiée (Q_{M}) d'un maillon de chaîne (k₁, k₂, k₃) se trouve exclusivement à l'intérieur de deux plans enveloppe parallèles (ε₁, ε₂ qui sont disposés à l'extérieur de ce maillon de chaîne (k₁, k₂, k₃) et s'étendent respectivement dans le sens longitudinal (X) et dans le sens vertical (Z) de ce maillon de chaîne (k₁, k₂, k₃), les deux plans enveloppe (ε₁, ε₂ étant espacés l'un de l'autre d'une distance maximale correspondant au diamètre de la soudure ou à l'épaisseur d'un point de soudure dans la zone du point de soudure (d_{S}).

11. Chaîne en acier selon l'une quelconque des revendications 1 à 10, **caractérisée en ce que** la section transversale modifiée (Q_{M} d'un maillon de chaîne (k₁, k₂, k₃) se trouve exclusivement entre deux plans enveloppe (ε₁, ε2) qui sont disposés à l'extérieur d'un arc de maillon de chaîne (k_{B}) de ce maillon de chaîne (k₁, k₂, k₃) et s'étendent respectivement dans la direction longitudinale (X) et dans la direction verticale (Z) de ce maillon de chaîne (k₁, k₂, k₃),
- les deux plans enveloppe (ε₁, ε₂ en cas d'un maillon de chaîne (k₁, k₂, k₃) fabriqué en acier rond étant espacés l'un de l'autre d'une distance maximale correspondant au diamètre nominal (d) de la géométrie de section transversale nominale (G) du matériau de base essentiellement circulaire, ou
- les deux plans enveloppe (ε₁, ε₂ en cas d'un maillon de chaîne (k₁, k₂, k₃) fabriqué en acier profilé étant espacés l'un de l'autre d'une distance maximale correspondant à une largeur nominale de section transversale (d_{P}) entre deux flancs de profilé (f₄, f₅, f_{4M}, f_{5M}) de la géométrie de section transversale nominale (G) du matériau de départ profilé.

12. Chaîne en acier selon l'une quelconque des revendications 1 à 11, **caractérisée en ce qu'**un maillon de chaîne (k₁, k₂, k₃) ayant des sections transversales modifiées (Q_{M} le long de sections longitudinales modifiées (L_{M}) présente la même largeur intérieure de maillon (bi), la même largeur extérieure de maillon (b_{A}) et le même pas de chaîne (t) qu'un maillon classique d'une chaîne en acier à section transversale nominale constante (Q) et sans modification de section transversale.

13. Procédé de fabrication d'une chaîne en acier, comprenant une succession des étapes suivantes :
a) fournir un matériau laminé en acier (1), en particulier de fils ou de barres laminés, sous forme d'un matériau en acier rond ayant une section transversale nominale (Q) essentiellement circulaire et un diamètre nominal (d), ou sous forme d'un matériau en acier profilé ayant une section transversale nominale profilée (Q) ;
b) délivrer continuellement le matériau laminé en acier (1) ainsi fourni dans le sens longitudinal (2) dans un dispositif de formage (3) ;
c) mettre sous forme par sections le matériau laminé en acier (1) respectivement le long de sections longitudinales modifiées (L_{M}) qui sont disposées en alternance avec des sections longitudinales intermédiaires (1) sans modification de section transversale dans la direction longitudinale (2) du matériau en acier rond (1), imprimant une section transversale modifiée (Q_{M} au matériau laminé en acier (1) le long d'une section longitudinale modifiée (L_{M}) par déformation, en produisant un aplatissement de section transversale (A_{M}) par écrasement le long d'un côté longitudinal de la section longitudinale modifiée (L_{M}) et en disposant le volume de déformation aplati (V_{A}) ainsi obtenu comme volume d'usure supplémentaire (V_{M}) sur le côté longitudinal de la section longitudinale modifiée (L_{M}) opposé à l'aplatissement de section transversale (A_{M}) de telle sorte qu'au moins dans une section avec une surface périphérique arrondie (U), un rayon d'arrondi nominal (r) soit augmenté et qu'au moins une section avec une surface périphérique arrondie modifiée (U_{M}) soit obtenue avec un rayon d'arrondi modifié (r_{M}) augmenté par rapport au rayon d'arrondi nominal (r) ;
d) découper le matériau laminé transformé par sections en axes de chaîne (8) d'une longueur totale (L_{G}) qui correspond à la somme des longueurs de deux sections modifiées (L_{M}) et de deux sections (l) sans modification de section, chaque axe de chaîne (8) étant coupé (7) à mi-longueur (1/2) de la deuxième section longitudinale (1) sans modification de section transversale ;
e) cintrer chaque axe de chaîne (8) à l'aide d'un dispositif de cintrage (12) pour former un maillon de chaîne pré-cintré (9), les deux sections longitudinales modifiées (L_{M}) ayant une section transversale modifiée (Q_{M}) étant disposées de manière à se trouver dans la zone des courbures des maillons de chaîne (k_{B}) et les sections longitudinales intermédiaires (l) sans modification de la section transversale à se trouver dans la zone des branches des maillons de chaîne (k_{S}), les aplatissements de la section transversale (A_{M}) étant disposés sur les côtés extérieurs des courbures (k_{B}) des maillons de chaîne ainsi qu'un rayon de courbure modifié (r_{M}) agrandi par rapport au rayon de courbure nominal (r) étant disposé dans la zone de la courbure intérieure des maillons de chaîne, sur le côté intérieur de la courbure (k_{B}) des maillons de chaîne ;
f) assembler des plusieurs maillons de chaîne pré-cintrés (9) pour former une chaîne pré-cintrée ;
g) souder les extrémités libres (7) de chaque maillon pré-cintré (9) pour former un maillon fini (k₁, k₂, k₃) en forme d'anneau, dans lequel l'une des branches du maillon (k_{S}) présente un point de soudure avec un diamètre (d_{S}) ou une épaisseur (d_{S}) de point de soudure.

14. Procédé selon la revendication 13, **caractérisé en ce que**, à l'étape c), le matériau en acier laminé (1) est formé par sections par écrasement à froid, pressage à mi-chaud ou à chaud, ou par laminage à chaud.

15. Procédé selon l'une quelconque des revendications 13 ou 14, **caractérisé en ce que**, à l'étape c), le matériau en acier laminé (1) est formé par sections de telle sorte que le rayon d'arrondi modifié (r_{M}) le long de la section de longueur modifiée (L_{M}) soit inférieur à 1,1 fois la valeur du rayon d'arrondi nominal (r), de préférence comprise entre 1,02 et 1,09 fois la valeur du rayon d'arrondi nominal (r).
